# EUROPEAN PATENT SPECIFICATION

(11) **EP 4 439 360 B1**
(45) Date of publication and mention of the grant of the patent: **01.10.2025**
(21) Application number: 23165414.6
(22) Date of filing: 30.03.2023
(51) Int. Cl.: G06F 21/62, G06F 9/46, H04L 9/40

(54) **CONTROLLING DATA ACCESS**
STEUERUNG DES DATENZUGRIFFS
CONTRÔLE D'ACCÈS À DES DONNÉES

(43) Date of publication of application: 02.10.2024
(73) Proprietor: Sage Global Services Limited, Newcastle upon Tyne NE28 9EJ (GB)
(72) Inventor: GOODWIN, Michael Stuart, Newcastle upon Tyne, NE28 9EJ (GB)
(74) Representative: Definition IP Limited

(56) References cited:
- WO-A1-2022/010818
- US-B1- 11 315 041
- US-B2- 11 580 239

## Description

### Technical Field

The present invention relates to techniques for controlling access to data generated by tenants of a multi-tenant software application.

### Background

In "multi-tenant" computer system architectures, a single computer application instance running on a single computer system simultaneously provides software application services to multiple users ("tenants"). To facilitate this, the computing resources of the computer system (for example data processing resources and data storage resources) are allocated to the different tenants.

Data storage in particular is partitioned on a "tenancy" basis, with each tenant being allocated a specific partition of data storage to read and write data to.

Given that multiple tenants are allocated data storage within the same overall data storage resource (for example the same database), for data security and data integrity purposes, it is very important that access to these logical data partitions is strictly controlled. In particular, to assure users that their data is secure, data partitions are not shared between tenants and read and write access to any given tenant's data partition is typically exclusively limited to the tenant themselves.

Whilst such data access policies provide a simple and effective mechanism for ensuring data integrity and security in multi-tenant environments, this approach does have drawbacks in certain settings.

For example, in highly networked environments where multiple software applications exchange data files, and where those data files relate to business processes that rely on accurate and consistent information (for example processes involving the processing of invoices, statements of account and other accounting-type documents), it is generally desirable that data files only exist as a single immutable version.

If data files only exist as a single version (for example mutable, but with an audit trail), this means that any entity can be sure that the information in a data file, and which, for example, a business process relies, is the single definitive version of that information. Such assurances make it inherently easier to build reliable business processes which are more robust and less prone to error.

However, conventional multi-tenant data access security techniques make such an approach awkward to implement. As described above, most conventional multi-tenant software environments are configured so that data access is strictly limited to the tenant themselves.

Consequently, in multi-tenant environments, data files are typically exchanged between tenants and other software applications as copies of an original version which is maintained by the tenant in its own data partition.

However, as well as requiring more data communication and data storage resource, this inevitably results in multiple versions of the same data files meaning that third entity processes which rely on the integrity of the data in these data files being innately less reliable and less secure.

Moreover, the tenant would still retain total control over modifying and even deleting the data and therefore any data file shared in this way could not be relied on as being a definitive immutable copy.

Furthermore, a third entity could not normally be provided with a systematic guarantee that any data access that they are provided with, will not be unilaterally withdrawn by the tenant.

Further still, in such examples, if a tenant does wish to share data with a third entity, the tenant themselves must manage third entity access. This can impose administrative difficulties on the tenant particularly if, for example user credentials associated with the third entity change (for example if a new user account is added to the third entity system or a user associated with an existing user account of the third entity system leaves). Document WO 2022/010818 is a relevant document in the field of controlling the access to stored tenants data.

### Summary of the Invention

In accordance with a first aspect of the invention there is provided a method of controlling data access to data items generated by tenants of a multi-tenant software application which have been selectively written to a shared data item database on the basis that access to the data items is to be shared with third-entity software applications, each data item stored in association with data item metadata specifying at least one property of the data item and a relationship identifier associated with a relationship connecting an entity associated with the tenant that generated the data item and a further entity, said method comprising: receiving an access request to access one or more data items stored in the shared data item database from a software application associated with a requesting entity, said access request including a requester identifier identifying the requesting entity and data item property data specifying at least one data item property; selecting, based on the at least one data item property, an access policy from a plurality of access policies, each access policy defining a relationship structure type; querying a relationship database using the requester identifier and the relationship structure defined in the access policy to identify any relationship structures to which the requesting entity is party and which conform to the relationship structure type defined in the access policy, said relationship database having stored thereon relationship data indicative of a plurality of relationship structures corresponding to relationships between a plurality of entities, each relationship structure including a relationship identifier; and, if one or more relationship structures are identified: identifying the relationship identifier associated with each identified relationship structure, and granting access to any data items stored in the shared data item database which are associated with a relationship identifier that matches the identified relationship identifier and that are associated with at least one data item property that matches the at least one data item property specified in the access request.

Optionally, data item metadata associated with each data item stored in the shared item database specifies a plurality of properties of the data item, and the data item property data of the access request specifies a plurality of data item properties, and the step of granting access to data items stored in the shared data item database comprises: granting access to any data items stored in the shared data item database which are associated with the relationship identifier that matches the identified relationship identifier and that are associated with a plurality of data item properties that match the plurality of data item properties specified in the access request.

Optionally, the at least one property of the data item comprises a data item type.

Optionally, the at least two properties of the data item comprise a data item type and a data item identifier identifying a specific data item.

Optionally, the access request further comprises an access action identifier specifying a type of data access action, said method comprising selecting the access policy based on the at least one data item property and the access action identifier.

Optionally, the relationship data stored on the relationship database indicative of relationship structures corresponding to relationships between the plurality of entities comprises: data elements of a first type associated with the entities, and data elements of a second type associated with relationship types connecting two entities of the plurality of entities, wherein each relationship structure is formed by a combination of data elements of the first type and data elements of the second type.

Optionally, each relationship identifier associated with a given relationship structure stored in the relationship database is associated with a specific data element of the second type that forms part of the given relationship structure, said relationship identifier thereby associated with a relationship type connecting two specific entities of the identified relationship structure.

Optionally, data elements of the first type represent nodes and data elements of the second type represent edges.

Optionally, the shared data item database is a ledger database.

Optionally, the data items stored in the shared item database are data items relating to a business process.

In accordance with a second aspect of the invention there is provided a system for controlling data access to data items, said system comprising: a multi-tenant software application configured to run a plurality of tenants, and a shared data item management function comprising access control logic, a shared data item database, a relationship database and an access policy database, wherein responsive to identifying a data item generated by a tenant which is to be shared with one or more third-entity software applications, said multi-tenant software application is configured to: communicate a data item write request comprising the shared data item and data item metadata specifying at least one property of the data item and a relationship identifier associated with a relationship connecting an entity associated with the tenant that generated the data item and a further entity, responsive to which the shared data item management function is configured to: write the data item and data item metadata to the shared data item database, wherein subsequently, on receipt of an access request to access one or more data items stored in the shared data item database from a software application associated with a requesting entity, said access request including a requester identifier identifying the requesting entity and data item property data specifying at least one data item property, said access control logic of the shared data item management function is configured to: select, based on the at least one data item property, an access policy from a plurality of access policies stored in the access policy database, each access policy defining a relationship structure type; query the relationship database using the requester identifier and the relationship structure defined in the access policy to identify any relationship structures to which the requesting entity is party and which conform to the relationship structure type defined in the access policy, said relationship database having stored thereon relationship data indicative of a plurality of relationship structures corresponding to relationships between a plurality of entities, each relationship structure including a relationship identifier; and, if one or more relationship structures are identified: identify the relationship identifier associated with each identified relationship structure, and grant the software application associated with the requesting entity access to any data items stored in the shared data item database which are associated with a relationship identifier that match the identified relationship identifier and that are associated with at least one data item property that matches the at least one data item property specified in the access request.

Optionally, the multi-tenant software application is further configured to identify data items that are not to be shared with third entity software applications and write such data items to a partitioned database.

In accordance with a third aspect of the invention there is provided access control logic for use in a system in accordance with the second aspect, said access control logic configured to: receive an access request to access one or more data items stored in a shared data item database from a software application associated with a requesting entity, said access request including a requester identifier identifying the requesting entity and data item property data specifying at least one data item property; select, based on the at least one data item property, an access policy from a plurality of access policies stored in an access policy database, each access policy defining a relationship structure type; query a relationship database using the requester identifier and the relationship structure defined in the access policy to identify any relationship structures to which the requesting entity is party and which conform to the relationship structure type defined in the access policy, said relationship database having stored thereon relationship data indicative of a plurality of relationship structures corresponding to relationships between a plurality of entities, each relationship structure including a relationship identifier; and, if one or more relationship structures are identified: identify the relationship identifier associated with each identified relationship structure, and grant the software application associated with the requesting entity access to any data items stored in the shared data item database which are associated with a relationship identifier that matches the identified relationship identifier and that are associated with at least one data item property that matches the at least one data item property specified in the access request.

In accordance with a fourth aspect of the invention there is provided a computer program which when run on a computing device, implements a method in accordance with the first aspect.

In accordance with certain embodiments of the invention, a technique is provided which improves the way in which access to data generated by tenants of a multi-tenant software application is controlled, particularly data that is to be accessed by other software applications.

In particular, a multi-tenant software application is modified so that data generated by a tenant is selectively written to a conventional tenancy partitioned database unless it is to be shared, in which case it is written to a dedicated shared data database.

To ensure that the data stored in the database is accessed securely, the system employs a relationship-driven access control mechanism. This mechanism is based on real-world relationships between various entities, which are represented as relationship data structures in a relationship database. Additionally, a policy database defines rules for accessing data items according to their type and access request type.

The system ensures secure access through a two-step process. First, based on the access request, the access control logic identifies the appropriate policy from the policy database and determines the required relationship structure type that the requesting entity must be part of to gain access. The access control logic then identifies all relationship structures in the database that match the required type and extracts relationship identifiers associated with these relationship structures.

Second, the access control logic queries the data item database to find data items associated with the extracted relationship identifiers and having the requested data type. Access is granted only to these data items.

By using this relationship-driven access control mechanism, the system ensures that data is accessed securely, as access is granted only to parties that have the appropriate relationship with the entity or entities related to the data item being accessed.

This approach helps maintain data privacy and security by ensuring that only authorized parties can access specific data items. By linking access permissions to real-world relationships between entities and defining policies that govern access based on these relationships, the system creates a contextual framework for granting or denying access. This means that access to data items is not solely based on generic roles or privileges but takes into consideration the actual relationships between the entities involved.

For example, if a data item contains information about a person's payslip, the system would only grant access to parties that have a relevant relationship with the person or the person's employer, such as the person themselves, a human resources employee, or a payroll service provider. This context-sensitive approach reduces the risk of unauthorized access and ensures that data is accessed securely, in accordance with the established relationships and policies.

Further still, in typical embodiments, once a data item generated by a tenant has been written to the shared data database, the tenant themselves is only granted access to the data they have shared in accordance with the technique described above. Advantageously, this gives third entities wishing to access the data certainty that the data in question will not be changed (for example deleted or modified) beyond the conditions defined in the relevant access policy.

Further still, in accordance with certain embodiments of the invention, a technique is provided that enables data generated by a tenant to be shared with other software applications, without the tenant being required to manage aspects of data access.

The invention is defined in the independent claims.

### Brief Description of the Drawings

Embodiments of the present invention will now be described by way of example only with reference to the accompanying drawings where like parts are provided with corresponding reference numerals and in which:
Figure 1 provides a simplified schematic diagram of a conventional multi-tenant software system;
Figure 2 provides a simplified schematic diagram depicting a modified multi-tenant software system for sharing data generated by tenants of a multi-tenant software application in accordance with certain embodiments of the invention;
Figure 3 provides a flow chart depicting a summary of the operational steps performed by a shared data management function 219 in accordance with certain embodiments of the invention;
Figure 4 provides a diagram depicting relationship data associated with an illustrative example of the invention;
Figure 5 provides a diagram depicting a plurality of data items stored on a shared item database in accordance with certain embodiments of the invention;
Figures 6a, 6b and 6c provide diagrams depicting the identification of relationship structures in accordance with certain embodiments of the invention;
Figure 7 provides a schematic diagram depicting an arrangement of relationship data in accordance with an example;
Figure 8 provides a schematic diagram depicting an arrangement of relationship data in accordance with an example, and
Figure 9 provides a simplified schematic diagram depicting a system for routing messages using the arrangement of relationship data shown in Figure 8.

### Detailed Description

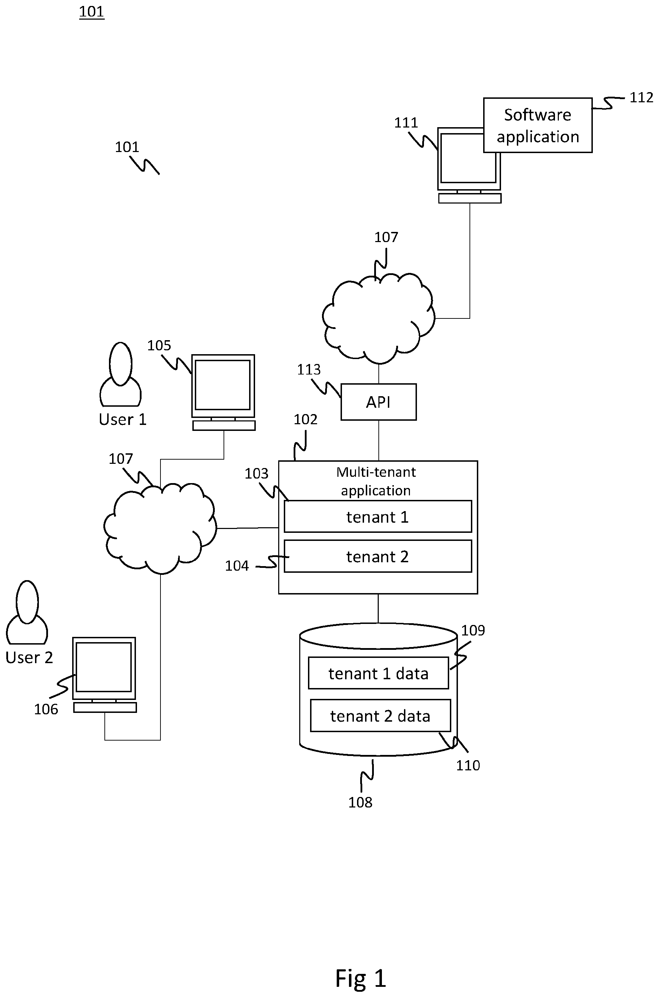

Figure 1 provides a simplified schematic diagram of a conventional multi-tenant software system 101 with which the skilled person will be familiar.

The multi-tenant software system 101 comprises a multi-tenant software application 102 which simultaneously runs multiple versions ("tenants") of a software application for different users. For simplicity, the example shown in Figure 1 depicts two tenants, but the skilled person will understand that a typical multi-tenant software application instance will support more, normally many more, users than this.

The computing resources (e.g., memory resources and processing resources) of the multi-tenant software application 102 are divided across first tenant resources 103 associated with a first tenant and second tenant resources 104 associated with a second tenant.

The first tenant is a first server-side application accessed by a client application running on a first computing device 105 associated with a first user (User 1), and the second tenant is a second server-side application accessed by a client application running on a second computing device 106 associated with a second user (User 2).

The first computing device 105 and second computing device 106 are communicatively connected to the multi-tenant software application instance 102 via a data network 107.

Data generated by the tenants of the multi-tenant software application instance 102 is written by the multi-tenant software application 102 to a tenancy partitioned database 108. The tenancy partitioned database 108 is divided by tenancy into a first data space 109 for data generated by the first tenant and a second data space 110 for data generated by the second tenant.

Figure 1 shows a further computing device 111 connected via a data network 107 and an API 113 to the multi-tenant software application instance 102.

For a software application 112 running on the further computing device 111 to gain access to the tenant data, for example a data file stored on the tenancy partitioned database 108, a data access request is communicated from the further computing device 111 via the data network 107 to the API 113 which then communicates the data access request to the multi-tenant software application 102.

If the request is granted, then the software application 112 running on the further computing device 111 is typically sent a copy of the requested data file.

In this conventional arrangement, the tenants of the multi-tenant software application instance 102 retain control over the data which they write to the tenancy partitioned database 108. For example, the first tenant can unilaterally modify or delete data stored in the first data space 109 and the second tenant can unilaterally modify or delete data stored in the second data space 110.

Consequently, in this example, the software application running on the further computing device 111 cannot rely on any copy of a data file it stored in the tenancy partitioned database 108 as being a definitive version of that data file because there is always a technical possibility that the data file in questions may be modified or deleted by the tenant who controls it. Moreover, access to the data stored in the tenancy partitioned database 108 could be unilaterally revoked by a tenant.

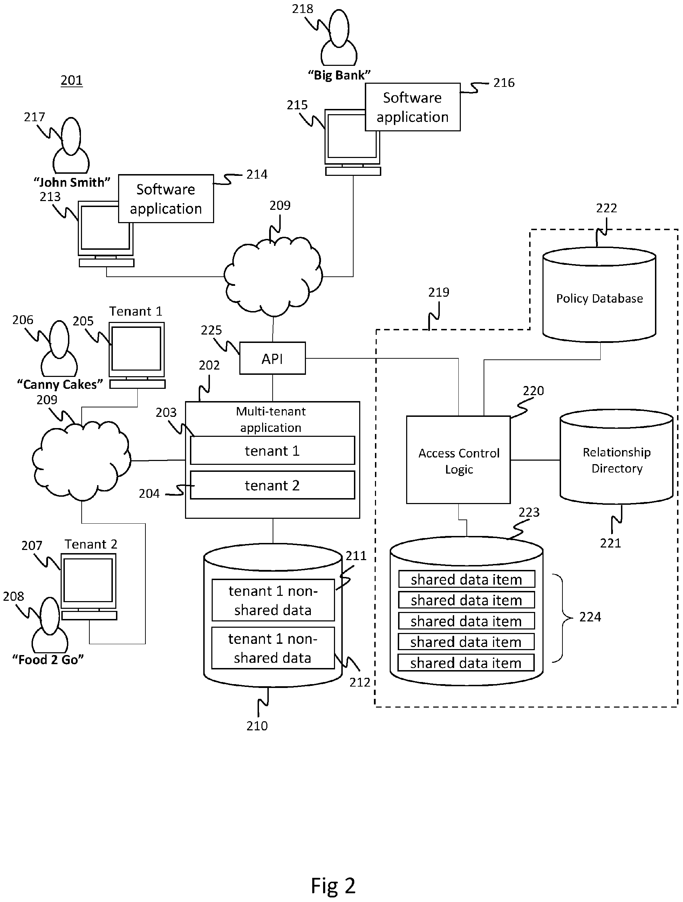

Figure 2 provides a simplified schematic diagram depicting a modified multi-tenant software system 201 for sharing data generated by tenants of a multi-tenant software application in accordance with certain embodiments of the invention.

In keeping with the conventional multi-tenant software system 101 described with reference to Figure 1, the modified multi-tenant software system 201 includes a multi-tenant software application instance 202, on which is running a first tenant 203 and a second tenant 204. For simplicity, the example shown in Figure 2 depicts two tenants, but the skilled person will understand that in a typical application, the multi-tenant software application instance 202 will support a greater number of tenants than this.

In this example, the first tenant 203 is a server-side application accessed by a client application running on the first computing device 205 and associated with a first entity 206. The second tenant 204 is a server-side application accessed by a client application running on a second computing device 207 and associated with a second entity 208.

The first computing device 205 and second computing device 207 are communicatively connected to the multi-tenant software application instance 202 via a data network 209.

The multi-tenant software application instance 202 is further communicatively coupled to a tenancy partitioned database 210 which is divided into a first data space 211 and second data space 212.

Figure 2 further depicts a first external computing device 213 running a first external software application 214 and a second external computing device 215 running a second external software application 216. The first external software application 214 is associated with a third entity 217 and the second external software application 216 is associated with a fourth entity 218.

In contrast to the conventional arrangement depicted in Figure 1, the multi-tenant software system 201 shown in Figure 2 further comprises a shared data management function 219 for controlling access to data items generated by the tenants of the multi-tenant software application instance 202.

Such data items include, for example data files or database records.

Specifically, the shared data management function 219 is configured to control access to data items generated by tenants of the multi-tenant software system 201 where those data items are to be accessed by (shared with) software applications that are separate from the tenant that generated the data item.

Software applications that are separate from the tenant that generated the data item could be other tenants (for example the second tenant 204 if the first tenant 203 generated the data to be shared); or software applications that are external to the multi-tenant software application instance 202, e.g. the first external software application 214 or the second external software application 216.

The shared data management function 219 comprises access control logic 220, a relationship directory 221, a data access policy database 222 and a shared data database 223 comprising a plurality of shared data items 224.

The shared data management function 219 is communicatively connected to an API 225 via the access control logic 220.

The multi-tenant software application instance 202 is configured so that when a tenant (in the example shown in Figure 2, the first tenant 203 or second tenant 204) generate a data item which is to be stored, the multi-tenant software application instance 202 determines whether the data item in question is intended to be potentially accessed by software applications that are separate from the tenant or whether the data item is going to be exclusively accessed by the tenant itself.

If the data item is to be used exclusively by the tenant who generated it, then the multi-tenant software application instance 202 is configured to write the data item to the tenancy partitioned database 210 in keeping with operation of a conventional multi-tenant software application described above. In this arrangement, data items stored in the tenancy partitioned database 210 are typically only accessed by the tenant who generated it.

However, if the data item is to be potentially accessed by (shared with) other software applications which are separate to the tenant itself, then the multi-tenant software application instance 202 is configured to communicate the data item in question to the API 225 as part of a data-item-write request. The API 225 then forwards the data-item-write request to the access control logic 220 which stores the data item in the shared data database 223.

In other words, the multi-tenant software application instance 202 selectively writes data items generated by the tenants to either the tenancy partitioned database 210 (if it is a data item which is only to be used by the tenant itself) or to the shared data database 223 (if it is a data item that is intended to be potentially shared with other software applications).

The data-item-write request includes the data item itself and also includes data item metadata. The data item metadata typically includes information about certain properties of the data item (for example a data item type, a unique identifier associated with the data item and other properties, for example a time stamp indicative of the time at which the data item was generated). The data item also includes relationship information.

The relationship information is typically in the form of a relationship identifier, which uniquely identifies a relationship between the entity associated with the tenant and a particular further entity. Typically, the data item will relate in some way to the further entity. In particular, typically, the data item will relate to data that is to be specifically shared with the further entity but may also be shared with other entities if they are party to a predefined relationship appropriately related to the further entity.

For example, the entity associated with the tenant may be an employer who issues payslips to its employees and the data item may be a payslip relating to a particular employee. In such a case, the relationship identifier may be an identifier that uniquely identifies an employment type relationship between the employee and the entity associated with the tenant (the employer).

As will be described in more detail below, advantageously, the inclusion of this relationship information means that the data item can be shared with the further entity itself but also means that the data item can be shared with other entities who can demonstrate that they have a certain type of relationship with the further entity.

Each shared data item is stored in shared data database 224 along with its shared data item metadata.

The relationship directory 221 has stored thereon relationship data which is indicative of a plurality of relationship data structures that are indicative of the relationships between the entities 206, 208, 217, 218 of the system.

Typically, the relationship structures are interconnected thereby forming a single map representative of how all of the entities 206, 208, 217, 218 are connected by different relationships.

The relationship data typically comprises data elements of a first type associated with the entities and data elements of a second type associated with relationship types that connect the entities.

In typical embodiments, the data elements of the first type are representative of nodes and the data elements of the second type are representative of edges. In this way, each relationship structure is formed by a combination of nodes and edges, where the nodes are representative of the entities who are party to the relationship structure, and the edges connecting these nodes are indicative of the relationship types that connect the entities.

A relationship structure can be as simple as a pair of nodes connected to a single edge, or multiple nodes connected via multiple edges.

As explained in more detail below, certain edges of the relationship data structures are associated with relationship identifiers which correspond with the relationship identifiers stored as part of the data item metadata. This enables a relationship with which a data item is associated, to be mapped to a relationship forming part of a data structure stored in the relationship directory 221.

As described in more detail below, advantageously this provides a mechanism by which permission to access a data item stored in the shared data item database 223 can be linked to whether or not a data access requesting entity is party to a relationship structure including an edge with a relationship identifier that matches a relationship identifier that is associated with the data item.

The data access policy database 222 has stored thereon a plurality of data access policies. Each data access policy specifies a type of relationship structure that a data access requesting entity must be party to if that data access requesting entity is to be permitted certain type of access to a certain type of data item.

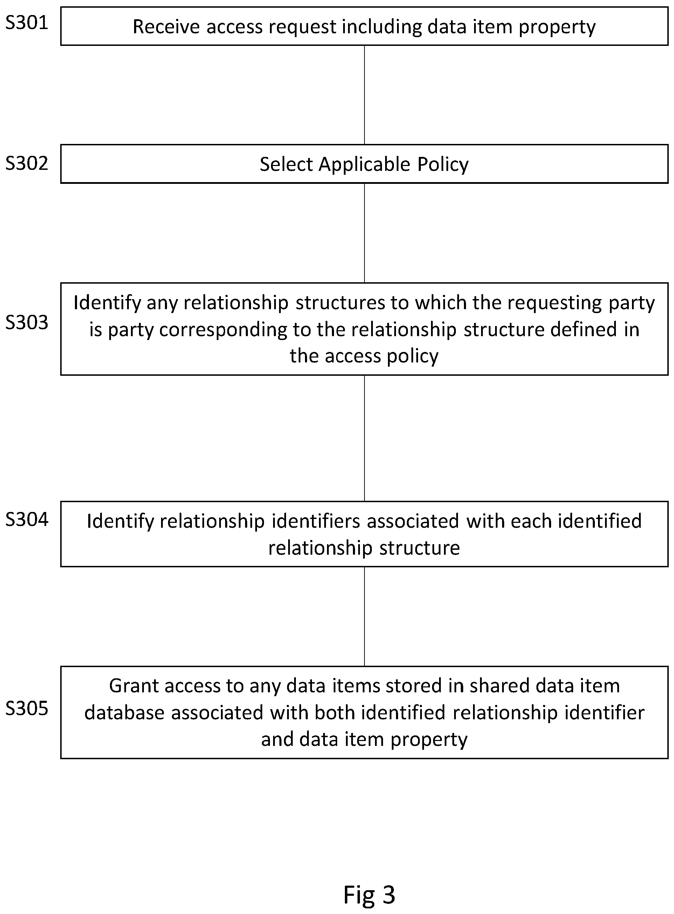

Figure 3 provides a flow chart depicting a summary of the operational steps performed by the shared data management function 219 and in particular, the access control logic 220 when it receives a data item access request to access data stored in the shared data item database 224.

In such an example, a software application (for example the first external software application 214 or the second external software application) communicates a data item access request to access one or more data items stored in the shared data database 224 to the API 225.

The data item access request typically includes:
- a requester identifier,
- data item criteria data, and
- an access action identifier

The requester identifier that identifies the entity associated with the computer system from which the data item access request originates. Typically, the requester identifier, associated with this access requesting entity, can be a "global" identifier (i.e. an identifier that is recognised by all entities) or a "local" identifier (i.e. an identifier that is recognised by one other entity or a group of other entities, but not necessarily all other entities).

The data item criteria data specifies properties of the data item or data items to which data access is requested.

The data item criteria data typically specifies at least a data item type. In certain examples, the data item criteria data may specify other data item properties. For example, where the access is requested to one or more specific data items, the request criteria data can include one or more data item identifiers that uniquely identify one or more specific data items. The data item criteria data may include other criteria such as a time indicator specifying a point in time at which the data item was generated.

The access action identifier specifies a particular type of data access action, for example "read all data items of specified type".

Responsive to receipt of a data item request received by the API 225, the API 225 forwards it to the access control logic 220. At a first step S301 the access control logic 220 receives the data item request. As specified above, the data item access request typically includes a requester identifier; data item criteria data and an access action identifier.

At a second step S302, using the data included in the data item access request, the access control logic 220 selects a policy from the policy database 222 that applies to the data item access request.

In certain embodiments, each policy in the policy database governs the conditions under which a data item access request of: a) a particular type (e.g., relating to a particular type of read action or a particular type of write action), and b) relating to a data item of a particular type, will be granted.

That is, in certain embodiments, each policy governs data access requests of a particular type relating to data items of a particular type. Thus, for example, data item access requests relating different types of data access but relating to the same type of data item will be governed by different data access policies.

Typically, therefore, at the second step S302, the access control logic 220 selects the relevant policy by querying the policy database for the policy that applies to the data item type specified in the data item criteria data and the access type specified by the access action identifier.

However, in other embodiments, the data access policies could govern data access requests differently. For example, rather than relating to data access requests of a particular type for data items of a particular type, the data access policies could govern all data access requests of a particular type or all data access requests for data items of a particular type. Further, rather than relating to data item types, the data access policies could relate to any other suitable data item property, for example size, date created, identity of creator and so on.

As mentioned above, each data access policy specifies a type of relationship structure that the data requesting entity must be party to, for the data item access request to be granted.

At a third step, S303, the access control logic 220 identifies the relationship structure type from the data access policy selected at the second step S302 and queries the relationship database 221 using the requester identifier to determine whether or not the access requesting entity is party to one or more relationship structures which correspond to the relationship structure type specified in the retrieved data access policy.

At a fourth step, S304, if any such relationship structures are identified, the access control logic then queries the relationship database 221 to identify any relationship identifiers associated with the identified relationship structures.

At a fifth step S305, the access control logic 220 then grants the requested data access type for all data items stored in the shared data item database 224 which include metadata indicating a data item type of the type specified in the data item criteria data and metadata indicating an association with a relationship identifier identified in the fourth step S304.

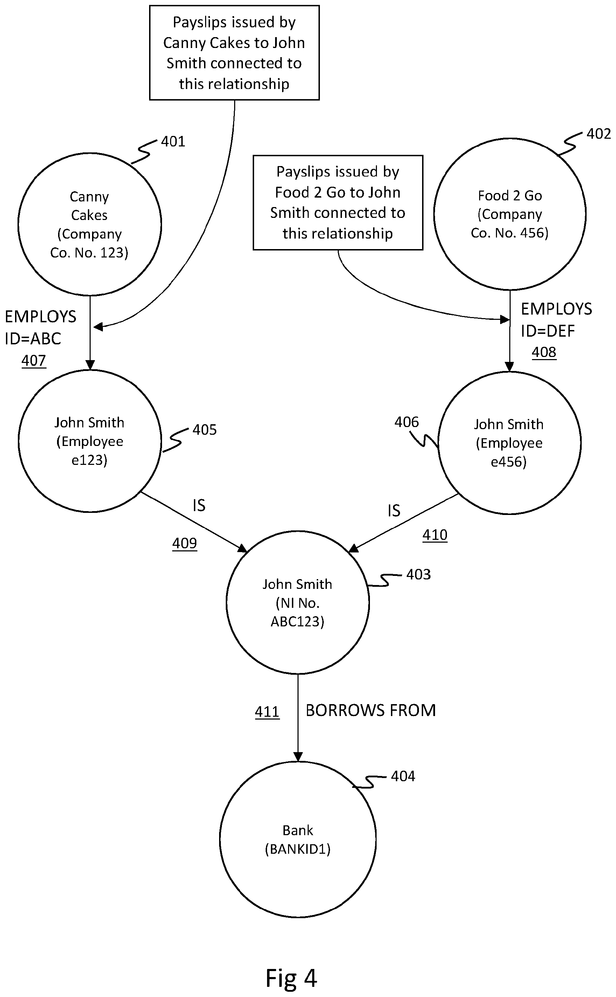

Illustrative examples of the process explained with reference to Figure 3 are now provided. These examples are explained with reference to an example of relationship data shown in Figure 4 and which depicts an example set of interconnected relationship structures that link the entities associated with the system shown in Figure 2.

As shown in Figure 2, the first entity 206 is a company "Canny Cakes"; the second entity 208 is a company "Food 2 Go"; the third entity 217 is an individual "John Smith", and the fourth entity 218 is a bank "Big Bank".

In these illustrative examples, the first tenant application 203 provides payroll services to the first entity 206 "Canny Cakes"; the second tenant application 204 provides payroll services to the second entity 208 "Food 2 Go"; the first external software application 214 provides personal accounting services to the third entity 217 "John Smith", and the second external software application 216 provides banking services systems to the fourth entity 218 "Big Bank".

The entities 206, 208, 217 and 218 are connected by the following illustrative relationships: the third entity 217 "John Smith", has previously been employed by the first entity 206 "Canny Cakes" and by the second entity 208 "Food 2 Go". Separately, the third entity 217 "John Smith" obtains services (e.g., banking services) from the fourth entity 218 "Big Bank".

These relationships are represented in relationship data as shown in Figure 4, which in these examples is stored in the relationship directory 221.

Specifically, the first entity 206 "Canny Cakes" is represented as a first node 401; the second entity 208 "Food 2 Go" is represented as a second node 402; the third entity 217 "John Smith" is represented as a third node 403, and the fourth entity 218 "Big Bank" is represented as a fourth node 404.

Each of these nodes 401, 402, 403, 404 is associated with a "global" identifier of the party to which the node relates. For example, the first node 401 is associated with a company identifier "Co. No. 123" uniquely identifying first entity 206 "Canny Cakes" to all other entities; the second node 402 is associated with a company identifier "Co. No. 456" uniquely identifying the second entity 208 "Food 2 Go" to all other entities; the third node 403 is associated with a person identifier, in this case national insurance number "NI No. 123", uniquely identifying with the third entity 217 "John Smith" to all other entities, and the fourth node 404 is associated with a bank identifier "BANKID1", uniquely identifying the fourth entity 218 "Big Bank" to all other entities.

A fifth node 405 corresponds to a record held by the first entity 206 "Canny Cakes" relating to the third entity 217 "John Smith". A sixth node 406 corresponds to a record held by the second entity 208 "Food 2 Go" relating to the third entity 217 "John Smith".

The fifth node 405 and sixth node 406 are associated with "local" identifiers for the party to which the node relates. In other words, these identifiers only identify the party to whom they relate, to particular other entities. Specifically, the fifth node 405 is associated with a payroll number "Employee e123" which uniquely identifies the third entity 217 "John Smith" to the first entity 206 "Canny Cakes", and the sixth node 406 is associated with a payroll number "Employee e456" which uniquely identifies the third entity 217 "John Smith" to the second entity 208 "Food 2 Go".

The first node 401 is connected to the fifth node 405 via a first edge 407. The first edge 407 is associated with an "Employs" relationship type indicating that the party to whom the record to which the fifth node 405 relates has been employed by the first entity 206 "Canny Cakes". The "Employs" relationship type associated with the first edge 407 has a relationship identifier "ABC".

The second node 402 is connected to the sixth node 406 via a second edge 408. The second edge 408 is associated with an "Employs" relationship type indicating that the party to whom the record to which the sixth node 406 relates has been employed by the second entity 208 "Food 2 Go". The "Employs" relationship type associated with the second edge 408 has a relationship identifier "DEF".

As is explained above, and as will be exemplified in more detail below, in typical examples, certain data items can be "connected" (i.e. associated with) certain relationships connecting the nodes. For example, payslip type data items issued by "Canny Cakes" to "John Smith" are "connected" with the "Employs" type relationship, identified by the relationship identifier "ABC". Similarly, payslip type data items issued by "Food 2 Go" to "John Smith" are "connected" with the "Employs" type relationship, identified by the relationship identifier "DEF".

The fifth node 405 is connected to the third node 403 via a third edge 409. The third edge 409 is associated with an "is" relationship type indicating that the data record to which the fifth node 405 relates is associated with the third entity 217 "John Smith".

The sixth node 406 is connected to the third node 403 via a fourth edge 410. The fourth edge 410 is also associated with an "is" relationship type indicating that the data record to which the sixth node 406 relates is also associated with the third entity 217 "John Smith".

Finally, the third node 403 is connected to the fourth node 404 via a fifth edge 411. The fifth edge 411 is associated with a "borrows from" relationship type indicating that the third entity 217 "John Smith" borrows money from the fourth entity 218 "Big Bank".

As can be seen from Figure 4, the edges 407, 408, 409, 410, 411 are directional indicating how the entities are connected via the relevant relationship type. For example, the first edge 407 points to the fifth node 405 indicating that the entity associated with the record to which the fifth node 405 relates (i.e. third entity 217 "John Smith") is the "target" of an "employs" relationship with the entity associated with the first node 401 (i.e. the first entity 206 "Canny Cakes").

Similarly, the fifth edge 411 connecting the third node 403 and the fourth node 404, points to the fourth node 404 indicating that the entity associated with the third node 403 (i.e. third entity 217 "John Smith") is the "target" of a "borrows from" relationship with the entity associated with the fourth node 404 (i.e. fourth entity 218 "Big Bank").

The following illustrative examples depict a situation in which, the first tenant 203 associated with the first entity 206 "Canny Cakes" and the second tenant 204 associated with the second entity 208 "Food 2 Go" have each generated data items, specifically payslip data items, which relate to their respective relationship with the third entity 217 "John Smith".

Further, both the first tenant 203 and second tenant 204 have communicated these payslip data items to the shared data database 224 as described above.

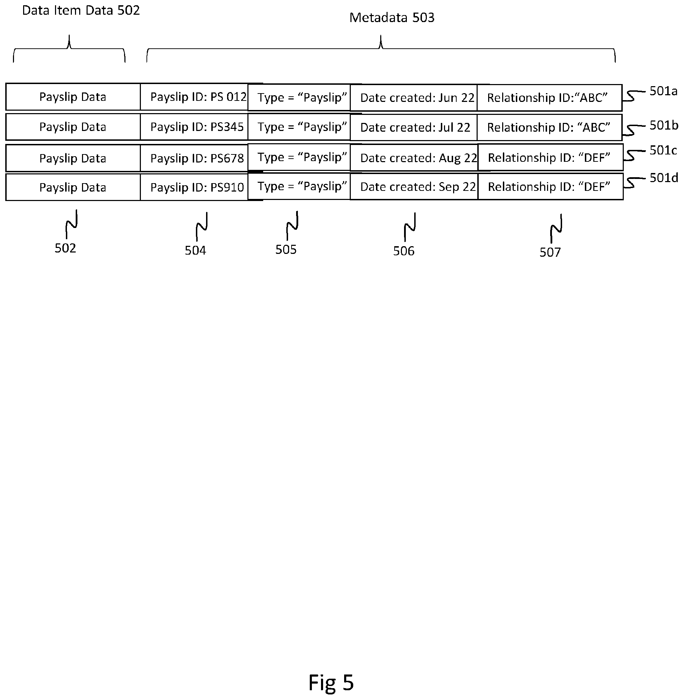

Figure 5 provides a diagram depicting a representation of the storage of such data items in the shared item database 224.

Figure 5 shows the storage of four data items 501a, 501b, 501c, 501d. Each of the data items 501a, 501b, 501c, 501d comprises data item data 502 relating to the data item itself (data concerning the payslip itself) and data item metadata 503. The data item metadata comprises data item property data including a unique identifier 504 associated with each data item; a data item type 505 associated with each data item and time data 506 indicative of when the data item was created. Each data item also includes relationship identifier data 507.

Each payslip data item includes payslip data and also data item metadata. The data item metadata includes type data indicating the type of the data item (i.e. payslip type); a relationship identifier associated with the relationship between the entities that the data item relates to (in the case of a payslip data item generated by the first entity 206 "Canny Cakes", this is relationship identifier "ABC", and in the case of a payslip data item generated by the second entity 208, this is relationship identifier "DEF"), and a unique identifier associated with the payslip data itself.

### Example 1

In a first example, the first external software application 214, associated with the third entity 217 "John Smith" generates a data item access request for all payslip data items that relate to the third entity 217 "John Smith". Such an operation could be performed when an individual is seeking access to all payslips previously issued by all their employers.

To facilitate this, the data item access request comprises:
- data item criteria data specifying the data item type "payslip";
- an access action identifier specifying a data access action of "read all data items of specified type associated with requesting entity", and
- a requester identifier which is the national insurance number "ABC123".

Because the data access request relates to data items associated with multiple entities (multiple employers), the requester identifier (national insurance number "ABC123") identifies the third entity on a global level. That is, it is an identifier type that will be recognised by multiple entities.

Referring back to the process flow depicted in Figure 3, at the first step S301, the first external computing device 213 generates the data access request and communicates this via the data network 209 to the API 225. The API 225 then forwards this data item access request to the access control logic 220.

At the second step, S302, the access control logic 220 extracts from the data item access request the access action identifier (in this case "read all data items of specified type associated with requesting entity") and the data item criteria data specifying the data item type to which the query relates (in this case the data item type "payslip").

The access control logic 220 then uses this data to generate an access policy query to identify the data access policy that governs data item access requests of the type specified in the data item access request. In this case, the access policy query is a query to identify an access policy that governs data item access requests to "read all data items of the type payslip, that are associated with the requesting entity".

The access policy query is then communicated to the policy database 222 which returns the relevant policy to the access control logic 220.

The returned data access policy includes a data structure type that the requesting entity must be party to for the data item access request to be granted.

In this example, the policy that is located specifies a data structure in which a node associated with the requesting entity is the target of an "IS" relationship from a source that is the target of an "EMPLOYS" relationship.

As will be understood, with reference to Figure 4, to be party to this relationship structure, the requesting entity must be associated with an employee data record (the node that is the source of the "IS" relationship), where that employee data record is associated with a specific employer (the node that is the source of the "EMPLOYS" relationship).

At the third step, the access control logic 220 generates a relationship query to the relationship database 221 to determine if the requesting entity is subject to such a relationship.

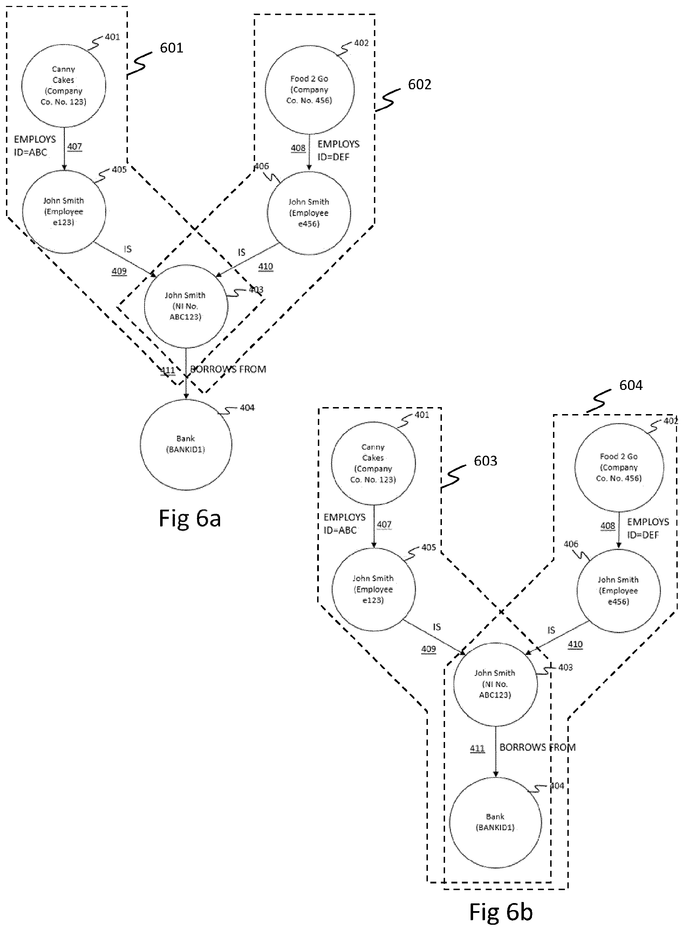

Figure 6a provides a schematic diagram corresponding to the interconnected relationship structures depicted in Figure 4 in which a first relationship structure 601 and a second relationship structure 602 are highlighted.

As can be seen from Figure 6a, the first relationship structure 601 comprises the third node 403 (associated with the global identity of the third entity 217 "John Smith"), which is the target of the third edge 409 which signifies an "IS" type relationship. The fifth node 405 is the source of the third edge 409 and is itself the target of the first edge 407 which signifies an "EMPLOYS" type relationship.

Similarly, as can be seen from Figure 6a, the second relationship structure 602 comprises the third node 403 (associated with the global identity of the third entity 217 "John Smith"), which is the target of the fourth edge 410 which signifies an "IS" type relationship. The sixth node 406 is the source of the fourth edge 410 and is itself the target of the second edge 408 which signifies an "EMPLOYS" type relationship.

As will be understood therefore, both the first relationship structure 601 and second relationship structure 602 are relationship structures of the type specified in the selected data access policy described above.

Consequently, at the third step, S303, both the first relationship structure 601 and the second relationship structure 602 are identified.

As can be seen from Figure 4 and Figure 6a, the first relationship structure 601, and in particular the first edge 407 signifying the "EMPLOYS" type relationship connecting the first node 401 and fifth node 405, is associated with the relationship identifier "ABC". Similarly, the second relationship structure 602, and in particular the second edge 408 signifying the "EMPLOYS" type relationship connecting the second node 402 and sixth node 406, is associated with the relationship identifier "DEF".

Consequently, at the fourth step S304, these two relationship identifiers are identified.

On completion of the fourth step, the access control logic 220 determines that the data item access request is to access all data items from the shared item database which are:
- of the type "payslip"
- associated with the relationship identifier "ABC", or
- associated with the relationship identifier "DEF".

As can be understood with reference to Figure 5, all of the depicted payslip data items meet these conditions.

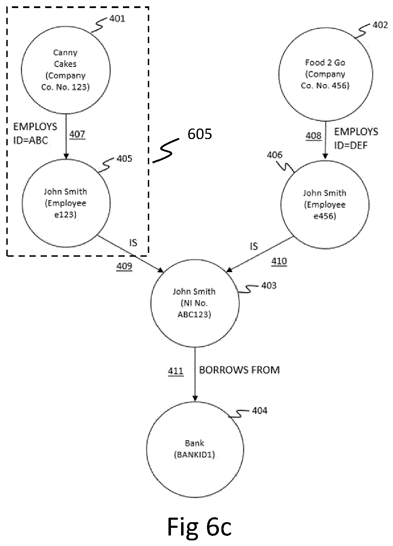

Accordingly, at the fifth step S305, the access control logic 220 grants the first external computing device read access to all the payslip data items 601a, 601b, 601c, 601d shown in Figure 6.

### Example 2

In a second example, the second external software application 216, associated with the fourth entity 218 "Big Bank" generates a data item access request for all payslip data items that relate to the third entity 217 "John Smith" that were created with time data between Jul 2022 and September 2022. Such an operation could be performed when an organisation such as a bank is seeking to verify income details about an individual who has requested a financial product, such as a loan.

To facilitate this, the data item access request comprises:
- data item criteria data specifying the data item type "payslip"; a specified entity identifier which is the national insurance number "ABC123" associated with the third entity 217 "John Smith" and the data range Jul 2022 to September 2022;
- an access action identifier specifying a data access action of "read all data items of a specified type and that are associated with a specified entity", and
- a requester identifier which is the bank identifier "BANKID1" associated with the fourth entity 218 "Big Bank".

In keeping with the first example, because the data access request relates to data items associated with multiple entities (multiple employers), the data access request includes a requester identifier identifying the third entity 217 "John Smith" on a global level, i.e. the national insurance number "ABC123".

In this second example, at the first step S301, the second external computing device 215 generates the data access request and communicates this via the data network 209 to the API 225. The API 225 then forwards this data item access request to the access control logic 220.

At the second step, S302, the access control logic 220 extracts from the data item access request the access action identifier (in this case "read all data items of a specified type and that are associated with a specified entity") and the data item criteria data specifying the data item type to which the query relates (in this case the data item type "payslip").

The access control logic 220 then uses this data to generate an access policy query to identify the data access policy that governs data item access requests of the type specified in the data item access request. In this case, the access policy query is a query to identify an access policy that governs data item access requests to "read all data items of the type payslip, that are associated with a specified entity".

The access policy query is then communicated to the policy database 222 which returns the relevant policy to the access control logic 220.

The returned data access policy includes a data structure type that the requesting entity must be party to for the data item access request to be granted.

In this example, the policy that is located specifies a data structure in which a node associated with the requesting entity is the target of a "BORROWS FROM" relationship, where the node that is the source of the "BORROWS FROM" relationship is associated with the specified entity, and the node that is associated with the specified entity is the target of an "IS" relationship from a source that is the target of an "EMPLOYS" relationship.

As will be understood, with reference to Figure 4, to be party to this relationship structure, the requesting entity must be connected to the specified entity via a "BORROWS FROM" relationship, and the specified entity must be associated with an employee data record (the node that is the source of the "IS" relationship), where that employee data record is associated with a specific employer (the node that is the source of the "EMPLOYS" relationship).

At the third step, the access control logic 220 generates a query to the relationship database 221 to determine if the requesting entity is subject to such a relationship.

Figure 6b provides a schematic diagram corresponding to the interconnected relationship structures depicted in Figure 4 in which a third relationship structure 603 and a fourth relationship structure 604 are highlighted.

As can be seen from Figure 6b, the third relationship structure 603 comprises the fourth node 404 (associated with the fourth entity 218) which is the target of the fifth edge 411 signifying a "BORROWS FROM" relationship. The third node 403 is the source of the fifth edge and is associated with the global identifier of the third entity 217 (i.e. national insurance number ABC123). Further, the third node 403, is the target of the third edge 409 which signifies an "IS" type relationship. The fifth node 405 is the source of the third edge 409 and is itself the target of the first edge 407 which signifies an "EMPLOYS" type relationship.

Similarly, as can be seen from Figure 6b, the fourth relationship structure 604 comprises the fourth node 404, fifth edge 411 and third node 403 which are connected as explained directly above. Further, the third node 403, is the target of the fourth edge 410 which signifies an "IS" type relationship. The sixth node 406 is the source of the fourth edge 410 and is itself the target of the second edge 408 which signifies an "EMPLOYS" type relationship.

As will be understood therefore, both the third relationship structure 603 and fourth relationship structure 604 are relationship structures of the type specified in the selected data access policy described above.

Consequently, at the third step, S303, both the third relationship structure 603 and the fourth relationship 604 structure are identified.

As can be seen from Figure 4 and Figure 6b, the third relationship structure 603, and in particular the first edge 407 signifying the "EMPLOYS" type relationship connecting the first node 401 and fifth node 405, is associated with the relationship identifier "ABC". Similarly, the fourth relationship structure 604, and in particular the second edge 408 signifying the "EMPLOYS" type relationship connecting the second node 402 and sixth node 406, is associated with the relationship identifier "DEF".

Consequently, at the fourth step S304, these two relationship identifiers are identified.

On completion of the fourth step, the access control logic 220 determines that the data item access request is to access all data items from the shared item database which are:
- of the type "payslip"
- within the data range July 22 to September 22
- associated with the relationship identifier "ABC", or
- associated with the relationship identifier "DEF".

As can be understood with reference to Figure 5, three of the depicted payslip data items (501b, 501c, 501d) meet these conditions.

Accordingly, at the fifth step S305, the access control logic 220 grants the first external computing device read access to the second payslip data item 501b, the third payslip data item 501c and the fourth payslip data item 501d indicated in Figure 5.

### Example 3

In a third example, the first external software application 214, associated with the third entity 217 "John Smith" generates a data access request for a specific payslip data item associated with employment by the first entity 206 "Canny Cakes". This data access request is communicated to the API 225 which then communicates the request to the access control logic 220 of the shared data management function 219. Such an operation could be performed when an individual is seeking access to one of their payslips previously issued by an employer.

To facilitate this, the data item access request comprises:
- data item criteria data specifying the data item type "payslip" and a specific data item identifier, "Payslip012";
- an access action identifier specifying a data access action of "read specified data item associated with requesting entity", and
- a requester identifier which is the employee number "e123".

Because the data access request relates to a data item generated by a single entity, (i.e. the first entity 206 Canny Cakes), the requester identifier can identify the third entity 217 on a local level, that is an identifier that is only recognised by a single other entity. In this example, this is the employee number "e123".

At the first step S301, the first external computing device 213 generates the data access request and communicates this via the data network 209 to the API 225. The API 225 then forwards this data item access request to the access control logic 220.

At the second step, S302, the access control logic 220 extracts from the data item access request the access action identifier (in this case "read specified data item associated with requesting entity") and the data item criteria data specifying the data item type to which the query relates (in this case the data item type "payslip").

The access control logic 220 then uses this data to generate an access policy query to identify the data access policy that governs data item access requests of the type specified in the data item access request. In this case, the access policy query is a query to identify an access policy that governs data item access requests to "read a specific data item of the type payslip, that is associated with the requesting entity".

The access policy query is then communicated to the policy database 222 which returns the relevant policy to the access control logic 220.

The returned data access policy includes a data structure type that the requesting entity must be party to for the data item access request to be granted.

In this example, the policy that is located specifies a data structure in which a node associated with the requesting entity is the target of an "EMPLOYS" relationship.

As will be understood, with reference to Figure 4, to be party to this relationship structure, the requesting entity must be associated with an employee data record.

At the third step, the access control logic 220 generates a relationship query to the relationship database 221 to determine if the requesting entity is subject to such a relationship.

Figure 6c provides a schematic diagram corresponding to the interconnected relationship structures depicted in Figure 4 in which a fifth relationship structure 605 is highlighted.

As can be seen from Figure 6c, the fifth relationship structure 605 comprises the fifth node 405 (associated with the local identity of the third entity 217 "John Smith"), which is the target of the first edge 407 which signifies an "EMPLOYS" type relationship.

As will be understood therefore, the fifth relationship structure 605 is a relationship structure of the type specified in the selected data access policy described above.

Consequently, at the third step, S303, the fifth relationship structure 605 is identified.

On completion of the fourth step S304, the access control logic 220 determines that the data item access request is to access a data item from the shared item database which is:
- of the type "payslip",
- associated with the relationship identifier "ABC", and
- where the data item has a unique identifier of Payslip012.

Accordingly, at the fifth step S305, the access control logic 220 grants the first external computing device read access to first payslip data item 501 indicated in Figure 5.

The system shown in Figure 2, and in particular the shared data management function 219 can be implemented in any suitable way. For example, the access control logic 220 may be implemented in any suitable manner, depending on the requirements and constraints of the system. For example, the access control logic may be implemented as a single software module, a distributed software module, or integrated into other software modules as part of a larger system. The specific implementation of the access control logic may be determined based on factors such as scalability, security, and compatibility with existing systems. Similarly, the relationship database 221, policy database 222 and shared data item database 224 can be implemented as separate, discrete databases or combined together in a single database. The components of the shared data management function 219 can be run on any suitable computing device, such as a server, or run across two or more computing devices using distributed computing techniques that are well known in the art.

In some examples, the shared data item database 224 is implemented as a shared ledger database. In this way, a history of changes to each data item (for example arising due to successive write requests) are recorded and cryptographically chained to the previous change. In this way, the integrity of the record can be verified. This makes it impossible for any entity - including the entity that operates the shared data item database 224- to make undetected changes. The end result is that all consuming entities can have very high trust levels in the integrity of the data, even though multiple entities may be able to change it.

### Federating Digital Networks Across Borders

In the example described above, relationship data is used to store relationship structures that can then be used to grant or deny access to data items.

However, in other examples such relationship data can be used for other purposes.

In particular, such relationship data can be used to represent the relationships between users of a software services platform, where that software services platform provides software services to various client software applications which are associated with the users.

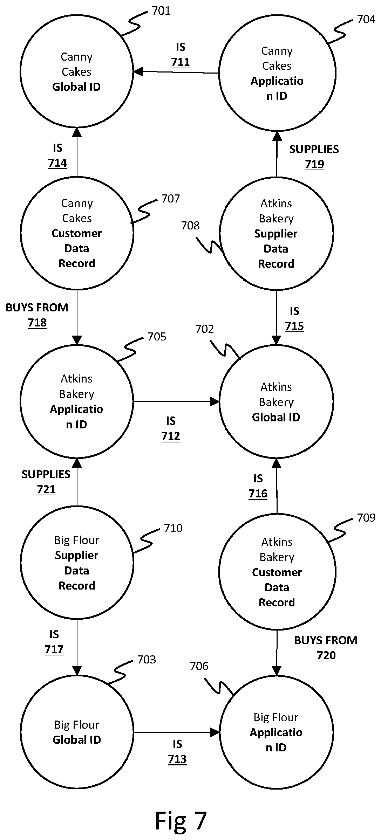

Figure 7 provides a diagram depicting a number of nodes and interconnecting edges defining the relationship between a number of representations of three entities: a company called "Canny Cakes"; a company called "Atkins Bakery", and a company called "Big Flour".

In an example, the entities may each control an instance of a client software application that is provided services, for example accounting and business process services, by a software services platform.

A first node 701 represents a global identifier associated with Canny Cakes, a second node 702 represents a global identifier associated with Atkins Bakery and a third node 703 represents a global identifier associated with Big Flour. In this example, the global identifiers associated with the first node 701, second node 702 and third node 703 are validated and maintained by the software services platform.

A fourth node 704 represents an instance of a software application associated with Canny Cakes, a fifth node 705 represents an instance of a software application associated with Atkins Bakery, and a sixth node 706 represents an instance of a software application associated with Big Flour.

In this example, Canny Cakes is a customer of Atkins Bakery and correspondingly Atkins Bakery is a supplier of Canny Cakes. Atkins Bakery is a customer of Big Flour and correspondingly, Big Flour is a supplier of Atkins Bakery.

Each of the software application instances maintain data records indicative of other entities with whom they have a relationship. Thus, the software application associated with Atkins Bakery will have a customer data record associated with Canny Cakes and a supplier data record associated with Big Flour. The software application associated with Canny Cakes will have a supplier data record associated with Atkins Bakery and the software application associated with Big Flour will have a customer data record associated with Atkins Bakery.

Accordingly, a seventh node 707 corresponds to a customer data record, relating to Canny Cakes, maintained by the software application instance associated with Atkins Bakery; an eighth node 708 corresponds to a supplier data record, relating to Atkins Bakery, maintained by the software application instance associated with Canny Cakes; a ninth node 709 corresponds to a customer data record, relating to Atkins Bakery, maintained by the software application instance associated with Big Flour, and a tenth node 710 corresponds to a supplier data record, relating to Big Flour, maintained by the software application instance associated with Atkins Bakery.

As can be seen from Second database partition 802, the nodes are connected by a plurality of edges indicating how the entities/entities that they represent are connected.

The first node 701 is connected by a first edge 711 to the fourth node 704 which indicates that the entity associated with the Canny Cakes software application instance is the same entity associated with the Canny Cakes global identifier.

The second node 702 is connected by a second edge 712 to the fifth node 705 which indicates that the entity associated with the Atkins Bakery software application instance is the same entity associated with the Atkins Bakery global identifier.

Similarly, the third node 703 is connected by a third edge 713 to the sixth node 706 which indicates that the entity associated with the Big Flour software application instance is the same entity associated with the Big Flour global identifier.

Further, the seventh node 707 is connected to the first node 701 by a fourth edge 714 indicating that the customer data record maintained by the software application instance associated with Atkins Bakery is associated with the same entity associated with the Canny Cakes global identifier.

Similarly, the eighth node 708 is connected to the second node 702 by a fifth edge 715 indicating that the supplier data record maintained by the software application instance associated with Canny Cakes is associated with the same entity associated with the Atkins Bakery global identifier.

Similarly, the ninth node 709 is connected to the second node 702 by a sixth edge 716 indicating that the customer data record maintained by the software application instance associated with Big Flour is associated with the same entity associated with the Atkins Bakery global identifier.

Similarly, the tenth node 710 is connected to the third node 703 by a seventh edge 717 indicating that the supplier data record maintained by the software application instance associated with Atkins Bakery is associated with the same entity associated with the Big Flour global identifier.

The seventh node 707 is connected to the fifth node 705 by an eighth edge 718 indicating that the entity associated with the customer data record maintained by the software application instance associated with Atkins Bakery (i.e. Canny Cakes) has "Buys From" relationship with Atkins Bakery.

Similarly, the eighth node 708 is connected to the fourth node 704 by a ninth edge 719 indicating that the entity associated with the supplier data record maintained by the software application instance associated with Canny Cakes (i.e. Atkins Bakery) has a "supplies" relationship with Canny Cakes.

Similarly, the ninth node 709 is connected to the sixth node 706 by a tenth edge 720 indicating that the entity associated with the customer data record maintained by the software application instance associated with Big Flour (i.e. Atkins Bakery) has a "buys from" relationship with Big Flour.

Similarly, the tenth node 710 is connected to the fifth node 705 by an eleventh edge 721 indicating that the entity associated with the supplier data record maintained by the software application instance associated with Atkins Bakery (i.e. Big Flour) has a "supplies" relationship with Atkins Bakery.

This arrangement of relationship data can be usefully used to route messages and manage the exchange of data between the software application instances. Moreover, this routing can be done transparently - that is the sending application need have no knowledge of the recipient application beyond its local identifier for the recipient.

For example, a routing function can have access to the relationship data as shown in Second database partition 802 and be connected to a message sending service. The message sending service is configured to receive message-send requests from the software application instances, obtain routing information from the routing function, and then route messages associated with the message-send requests to the relevant recipient.

In an example routing operation, the software application instance associated with Atkins Bakery may send a message-send request to the message sending service to send a message to Canny Cakes. The message-send request includes the message to be sent and a local identifier associated with the Canny Cakes customer data record maintained by the software application associated with Atkins Bakery.

On receipt of this message-send request, the message sending service is configured to communicate a routing request to the routing function which includes the local identifier associated with the Canny Cakes customer data record. The routing function is configured to map this local identifier to the seventh node 707. By making an appropriate call to the database in which the relationship data is stored, the routing function can then "traverse" the fourth edge 714 to the first node 701 thereby determining that the local identifier received in the message-send request relates to the entity associated with the Canny Cakes global identifier. By making a further appropriate database call, the routing function can then traverse the first edge 711 to determine the identity of the application instance associated with Canny Cakes. This can then be used to identify relevant message addressing information which can then be communicated back to the message sending service which then communicates the message to the application instance associated with Canny Cakes.

This arrangement, where relationship data is stored in an appropriate database and the routing function accesses it for the "traversing" process, is generally convenient to implement.

However, difficulties can arise when the relationship data is associated with entities located in different legal jurisdictions. This can lead to challenges related to data protection regulations, specific customer contracts, and concerns about customer acceptability. Data protection regulations in various jurisdictions govern the collection, storage, processing, and transfer of certain types of data, while customer contracts and acceptability concerns may impose additional limitations based on the entities' locations.

Non-compliance with regulations or failure to meet customer expectations across different jurisdictions can result in legal, financial, and reputational consequences.

For example, in certain jurisdictions, data protection laws distinguish between entities who are "data controllers" and entities who are "data processors". A data controller is an entity who has certain legal obligations to uphold with respect to how and where certain types of data for which they are responsible is processed. These legal obligations include requiring the data processor to follow strict guidelines if and when data is transferred for storage and processing to a different jurisdiction.

A data processor on the other hand, is an entity who processes such data on behalf of a data controller. A data processor can only process this data under the instruction of the data controller.

The fact that a data processor must obtain the instructions of a data controller to transfer data to a different jurisdiction makes the practical implementation of a method of routing messages and exchanging data as described above difficult if one or more of the entities to whom the data relates are located in different jurisdictions. This is because data can only be transferred to the location where the relationship data is stored for processing by the software services platform under the instruction of the relevant data controller.

However, the technique described above, assumes that the data processor (the software services platform) is authorised to process the relationship data shown in Second database partition 802 in a single location. However, as described in more detail below, this might not be the case for all of the relationship data.

With reference to Second database partition 802a, the fact that Atkins Bakery has a "buys from" relationship (as encoded by the eighth edge 718) with the entity associated with the customer data record to which the fifth node 705 relates, i.e. Canny Cakes, and the fact that Atkins Bakery has a "supplies" relationship (as encoded by the eleventh edge 721) with the entity associated with the customer data record to which the tenth node 710 relates, i.e. Big Flour, may be classed as data to which data protection regulations apply.

In this case, Atkins Bakery, as the entity responsible for this data, would likely be considered the data controller of this data for the purposes of data protection regulations. Consequently, this data could only be transferred out of the jurisdiction in which Atkins Bakery is located under the instruction of Atkins Bakery.

Similarly, the fact that Canny Cakes has a "supplies" relationship (as encoded by the sixth edge 712) with the entity associated with the customer data record to which the sixth node 706 relates, i.e. Atkins Bakery, may be classed as data to which data regulations apply, and Canny Cakes, as the entity responsible for this data, would likely be considered the data controller of this data. Consequently, this data could only be transferred out of the jurisdiction in which Canny Cakes is located under the instruction of Canny Cakes.

Similarly, the fact that Big Flour has a "buys from" relationship (as encoded by the tenth edge 720) with the entity associated with the customer data record to which the ninth node 709 relates, i.e. Atkins Bakery, may be classed as data to which data regulations apply, and Big Flour, as the entity responsible for this data, would likely be considered the data controller of this data. Consequently, this data could only be transferred out of the jurisdiction in which Big Flour is located under the instruction of Big Flour.

Consequently, for the software services platform (acting as a data processor) to hold any of this data in a different jurisdiction to the jurisdictions in which Atkins Bakery, Canny Cakes, and Big Flour are located, it would be necessary to obtain the relevant data transfer instructions from Atkins Bakery, Canny Cakes, and Big Flour.

However, it may not be practical to obtain these instructions because in a real-world scenario, the relationship data could include data related to many data controllers. Obtaining the required permissions from all of them to use the relationship data as a messaging service could be difficult or unfeasible.

To address this problem, a modified arrangement of the relationship data can be provided.

In keeping with the example described above, this modified arrangement is explained in terms of an example where a software services platform provides software services to a group of client software applications. However, in this example, the users associated with the client software applications are located in different legal jurisdictions meaning that data controlled by these users cannot be transferred and processed in a different jurisdiction unless under the instruction of those users.

As will be explained in more detail below, in accordance with this arrangement, a message routing and data transfer technique can be implemented but without the need to obtain any data transfer instructions from entities who are data controllers.

In accordance with the modified arrangement, the relationship data is divided across multiple partitions each corresponding to the jurisdictions in which the data controller entities are located. In this way, data under the jurisdiction of a particular country or region is located in the partition located in the country or region.

However, the global identifier nodes which are controlled by the software services platform and which represent global identifiers of the entities who use the services provided by the software services platform are replicated across the separate database partitions. This allows for the communication of messages and data as described below. This is because the software provider is the data controller for the global identifier nodes, meaning it is free to replicate this data across jurisdictions without an instruction from any other party.

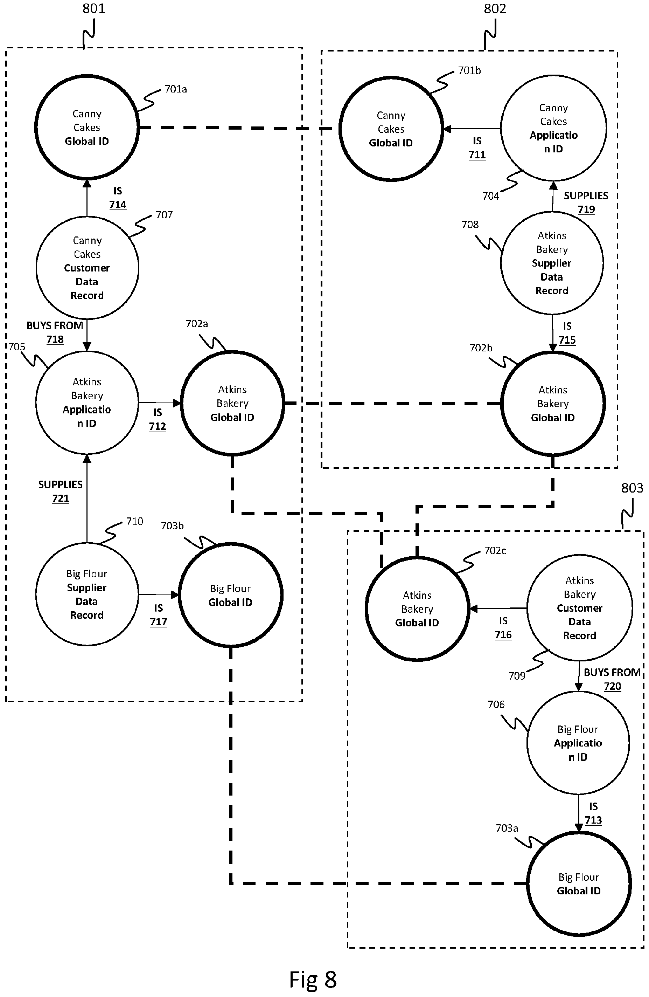

An example of such an arrangement of relationship data is shown in Figure 8. The example in Figure 8 corresponds to that described with Figure7, thus where appropriate corresponding reference numerals are used.

The data is divided into three partitions: a first database partition 801, a second database partition 802 and a third database partition 803. The first partition 801 contains all the data for which Atkins Bakery is the data controller, the second partition 802 contains all the data for which Canny Cakes is the data controller, and the third partition 803 contains all the data for which Big Flour is the data controller.

Although not shown in Figure 8, as will be understood, in typical implementations, the different data partitions have stored thereon data from other entities that are based in the same location as the data partition in question.

Specifically, the first database partition 801 contains data defining the seventh node 707, fourth edge 714 and eighth edge 718 specifying that Canny Cakes is a customer of Atkins Bakery; and contains data defining the eleventh edge 721, tenth node 710 and seventh edge 717 specifying that Big Flour is a supplier of Atkins Bakery. In this way, all of the data for which Atkins Bakery is a data controller, is stored in the first database partition 801.

The second database partition 802 contains data defining eighth node 708, ninth edge 719 and fifth edge 715 specifying that Atkins Bakery is a supplier of Canny Cakes. In this way, all of the data for which Canny Cakes is a data controller, is stored in the first database partition 801.

The third database partition 803 contains data defining the ninth node 709, tenth edge 720 and sixth edge 716 defining that Atkins Bakery is a customer of Big Flour. In this way, all of the data for which Big Flour is a data controller, is stored in the third database partition 803.

Further, a first global identifier node 701a associated with the global identity of Canny Cakes is located in the first database partition 801, and a second replicated global identifier node 701b associated with the global identity of Canny Cakes is located in the second database partition 802.

Correspondingly, a third global identifier node 702a associated with the global identity of Atkins Bakery is located in the first database partition 801, a fourth replicated global identifier node 702b associated with the global identity of Atkins Bakery is located in the second database partition 802, and a fifth replicated global identifier node 702c associated with the global identity of Atkins Bakery is located in the third database partition 803.

Further, a sixth global identifier node 703a associated with the global identity of Big Flour is located in the third database partition 803, and a seventh replicated global identifier node 703b associated with the global identity of Big Flour is located in the first database partition 801.

In use, in an example routing operation, the application instance associated with Atkins Bakery may send a message-send request to the message sending service to send a message to Canny Cakes. The message-send request includes the message to be sent and the local identifier maintained by the software application associated with Atkins Bakery for Canny Cakes.

On receipt of this message-send request, the message sending service is configured to communicate a routing request to the routing function which includes the local identifier for Canny Cakes.

The routing function is configured to map this local identifier to the seventh node 707 in the first database partition 801. By making an appropriate call to the first database partition 801, the routing function can then "traverse" the fourth edge 714 to the first global identifier node 701a thereby determining that the local identifier received in the message-send request relates to the entity associated with the Canny Cakes global identifier.

At this point, the routing function can then determine that the first global identifier node 701a is replicated in the second database partition 802 and locate the second replicated global identifier node 701b.

By making a further appropriate database call to the second database partition 802, the routing function can then traverse the first edge 711 to determine the identity of the application instance associated with Canny Cakes. This can then be used to identify relevant message addressing information which can then be communicated back to the message sending service which then communicates the message to the application instance associated with Canny Cakes.

In another example routing operation, the application instance associated with Canny Cakes may send a message-send request to the message sending service to send a message to Atkins Bakery. The message-send request includes the message to be sent and the local identifier maintained by the software application associated with Canny Cakes for Atkins Bakery.

On receipt of this message-send request, the message sending service is configured to communicate a routing request to the routing function which includes the local identifier for Atkins Bakery.

The routing function is configured to map this local identifier to the eighth node 708 in the second database partition 802. By making an appropriate call to the second database partition 802, the routing function can then "traverse" the fifth edge 715 to the fourth replicated global identifier node 702b thereby determining that the local identifier received in the message-send request relates to the entity associated with the Atkins Bakery global identifier.

At this point, the routing function can then determine that the fourth replicated global identifier node 702b is a replicated node of the third global identifier node 702a in the first database partition 801 and the fifth replicated global identifier node 702c in the third database partition 803.

The routing function can then make an appropriate call to the first database partition 801 to determine if there are any application instance nodes connected to the third global identifier node 702a, and make an appropriate call to the third database partition 803 to determine if there are any application instance nodes connected to the third global identifier node fifth replicated global identifier node 702c. In this example, this will identify the fifth node 705 revealing the identity of the application instance associated with Atkins Bakery. This can then be used to identify relevant message addressing information which can then be communicated back to the message sending service which then communicates the message to the application instance associated with Atkins Bakery.

In this way, relationship data can be used to route messages and manage the exchange of data between software application instances across jurisdictional boundaries without the need to seek additional data processing instructions from the data controllers who control the relationship data.

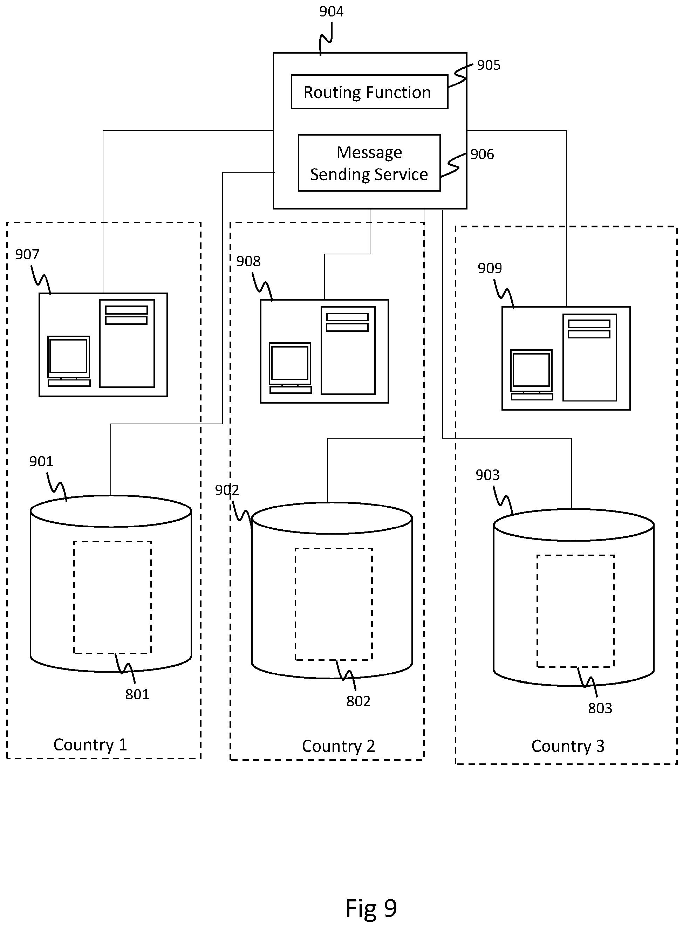

An example of a system for implementing this technique is depicted in Figure 9. A first physical database 901 is located in a first jurisdiction ("Country 1"), a second physical database 902 is located in a second jurisdiction ("Country 2"), and a third physical database 903 is located in a third jurisdiction ("Country 3"). The first database partition 801 described with reference to Figure 8 is located in the first physical database 901, the second database partition 802 is located in the second physical database 902, and the third database partition 803 is located in the third physical database 903.

A computer system 904 associated with the software services platform has running thereon a message sending service 905 and a routing function 906. A first client computer system 907, associated with Atkins Bakery is located in the first region ("Country 1"), a second client computer system 908 associated with Canny Cakes is located in the second region ("Country 2") and a third client computer system 909 associated with Big Flour is located in the third region ("Country 3").

Each of the first physical database 901, second physical database 902, third physical database 903, and first client computer system 907, second client computer system 908 and third client computer system 909 are communicatively connected to the computer system 904.

The examples described above are described using concepts from the General Data Protection Regulation (GDPR), such as data processors and data controllers. However, it is important to note that the technique can be applied to other data protection laws and frameworks from various legal jurisdictions. While the examples and terminology used in this application are based on GDPR, the principles and methodologies underlying the invention are adaptable and can be extended to accommodate different data protection requirements, ensuring compliance and addressing specific concerns in other legal contexts.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A method of controlling data access to data items generated by tenants of a multi-tenant software application which have been selectively written to a shared data item database on the basis that access to the data items is to be shared with third-entity software applications, each data item stored in association with data item metadata specifying at least one property of the data item and a relationship identifier associated with a relationship connecting an entity associated with the tenant that generated the data item and a further entity, said method comprising:
receiving an access request to access one or more data items stored in the shared data item database from a software application associated with a requesting entity, said access request including a requester identifier identifying the requesting entity and data item property data specifying at least one data item property;
selecting, based on the at least one data item property, an access policy from a plurality of access policies, each access policy defining a relationship structure type;
querying a relationship database using the requester identifier and the relationship structure type defined in the access policy to identify any relationship structures to which the requesting entity is party and which conform to the relationship structure type defined in the access policy, said relationship database having stored thereon relationship data indicative of a plurality of relationship structures corresponding to relationships between a plurality of entities, each relationship structure including a relationship identifier; and, if one or more relationship structures are identified:
identifying the relationship identifier associated with each identified relationship structure, and
granting access to any data items stored in the shared data item database which are associated with a relationship identifier that matches the identified relationship identifier and that are associated with at least one data item property that matches the at least one data item property specified in the access request.

2. A method according to claim 1, wherein data item metadata associated with each data item stored in the shared item database specifies a plurality of properties of the data item, and the data item property data of the access request specifies a plurality of data item properties, and the step of granting access to data items stored in the shared data item database comprises:
granting access to any data items stored in the shared data item database which are associated with the relationship identifier that matches the identified relationship identifier and that are associated with a plurality of data item properties that match the plurality of data item properties specified in the access request.

3. A method according to claim 1, wherein the at least one property of the data item comprises a data item type.

4. A method according to claim 2, wherein the at least two properties of the data item comprise a data item type and a data item identifier identifying a specific data item.

5. A method according to claim 1, wherein the access request further comprises an access action identifier specifying a type of data access action, said method comprising selecting the access policy based on the at least one data item property and the access action identifier.

6. A method according to any previous claim, wherein the relationship data stored on the relationship database indicative of relationship structures corresponding to relationships between the plurality of entities comprises:
data elements of a first type associated with the entities, and
data elements of a second type associated with relationship types connecting two entities of the plurality of entities, wherein
each relationship structure is formed by a combination of data elements of the first type and data elements of the second type.

7. A method according to claim 6, wherein each relationship identifier associated with a given relationship structure stored in the relationship database is associated with a a specific data element of the second type that forms part of the given relationship structure, said relationship identifier thereby associated with a relationship type connecting two specific entities of the identified relationship structure.

8. A method according to claim 6 or 7, wherein data elements of the first type represent nodes and data elements of the second type represent edges.

9. A method according to any previous claim, wherein the shared data item database is a ledger database.

10. A method according to any previous claim wherein the data items stored in the shared item database are data items relating to a business process.

11. A system for controlling data access to data items, said system comprising:
a multi-tenant software application configured to run a plurality of tenants, and
a shared data item management function comprising access control logic, a shared data item database, a relationship database and an access policy database, wherein
responsive to identifying a data item generated by a tenant which is to be shared with one or more third-entity software applications, said multi-tenant software application is configured to:
communicate a data item write request comprising the shared data item and data item metadata specifying at least one property of the data item and a relationship identifier associated with a relationship connecting an entity associated with the tenant that generated the data item and a further entity, responsive to which the shared data item management function is configured to:
write the data item and data item metadata to the shared data item database, wherein subsequently,
on receipt of an access request to access one or more data items stored in the shared data item database from a software application associated with a requesting entity, said access request including a requester identifier identifying the requesting entity and data item property data specifying at least one data item property, said access control logic of the shared data item management function is configured to:
select, based on the at least one data item property, an access policy from a plurality of access policies stored in the access policy database, each access policy defining a relationship structure type;
query the relationship database using the requester identifier and the relationship structure type defined in the access policy to identify any relationship structures to which the requesting entity is party and which conform to the relationship structure type defined in the access policy, said relationship database having stored thereon relationship data indicative of a plurality of relationship structures corresponding to relationships between a plurality of entities, each relationship structure including a relationship identifier; and, if one or more relationship structures are identified:
identify the relationship identifier associated with each identified relationship structure, and
grant the software application associated with the requesting entity access to any data items stored in the shared data item database which are associated with a relationship identifier that match the identified relationship identifier and that are associated with at least one data item property that matches the at least one data item property specified in the access request.

12. A system according to claim 11, wherein the multi-tenant software application is further configured to identify data items that are not to be shared with third entity software applications and write such data items to a partitioned database.

13. Access control logic for use in a system according to claim 11, said access control logic configured to:
receive an access request to access one or more data items generated by tenants of a multi-tenant software application which have been selectively written to a shared data item database on the basis that access to the data items is to be shared with third-entity software applications, each data item stored in association with data item metadata specifying at least one property of the data item and a relationship identifier associated with a relationship connecting an entity associated with the tenant that generated the data item and a further entity; the request is received from a software application associated with a requesting entity, said access request including a requester identifier identifying the requesting entity and data item property data specifying at least one data item property;
select, based on the at least one data item property, an access policy from a plurality of access policies stored in an access policy database, each access policy defining a relationship structure type;
query a relationship database using the requester identifier and the relationship structure type defined in the access policy to identify any relationship structures to which the requesting entity is party and which conform to the relationship structure type defined in the access policy, said relationship database having stored thereon relationship data indicative of a plurality of relationship structures corresponding to relationships between a plurality of entities, each relationship structure including a relationship identifier; and, if one or more relationship structures are identified:
identify the relationship identifier associated with each identified relationship structure, and
grant the software application associated with the requesting entity access to any data items stored in the shared data item database which are associated with a relationship identifier that matches the identified relationship identifier and that are associated with at least one data item property that matches the at least one data item property specified in the access request.

14. A computer program which when run on a computing device, implements a method according to claim 1.

## Patentansprüche

1. Verfahren zum Steuern von Datenzugriff auf von Mandanten einer mandantenfähigen Softwareanwendung erzeugte Datenelemente, die selektiv in eine gemeinsam genutzte Datenelementdatenbank geschrieben wurden, auf der Grundlage, dass Zugriff auf die Datenelemente mit Softwareanwendungen von Drittinstanzen geteilt werden soll, wobei jedes Datenelement in Verknüpfung mit Datenelementmetadaten gespeichert wird, die mindestens eine Eigenschaft des Datenelements und eine Beziehungskennung angeben, die mit einer Beziehung verknüpft ist, die eine mit dem Mandanten verknüpfte Instanz, der das Datenelement erzeugt hat, und eine weitere Instanz verbindet, wobei das Verfahren Folgendes umfasst:
Empfangen einer Zugriffsanforderung für Zugriff auf ein oder mehrere in der gemeinsam genutzten Datenelementdatenbank gespeicherte Datenelemente von einer Softwareanwendung, die mit einer anfordernden Instanz verknüpft ist, wobei die Zugriffsanforderung eine Anfordererkennung, die die anfordernde Instanz identifiziert, und Datenelementeigenschaftsdaten, die mindestens eine Datenelementeigenschaft angeben, beinhaltet;
Auswählen einer Zugriffsrichtlinie aus einer Vielzahl von Zugriffsrichtlinien basierend auf der mindestens einen Datenelementeigenschaft, wobei jede Zugriffsrichtlinie einen Beziehungsstrukturtyp definiert;
Abfragen einer Beziehungsdatenbank unter Verwendung der Anfordererkennung und des in der Zugriffsrichtlinie definierten Beziehungsstrukturtyps, um alle Beziehungsstrukturen zu identifizieren, an denen die anfordernde Instanz beteiligt ist und die konform mit dem in der Zugriffsrichtlinie definierten Beziehungsstrukturtyp sind, wobei die Beziehungsdatenbank Beziehungsdaten darin gespeichert aufweist, die auf eine Vielzahl von Beziehungsstrukturen hinweisen, die Beziehungen zwischen einer Vielzahl von Instanzen entsprechen, wobei jede Beziehungsstruktur eine Beziehungskennung beinhaltet; und, falls eine oder mehrere Beziehungsstrukturen identifiziert werden:
Identifizieren der Beziehungskennung, die mit jeder identifizierten Beziehungsstruktur verknüpft ist, und
Gewähren von Zugriff auf alle in der gemeinsam genutzten Datenelementdatenbank gespeicherten Datenelemente, die mit einer Beziehungskennung verknüpft sind, die mit der identifizierten Beziehungskennung übereinstimmt, und die mit mindestens einer Datenelementeigenschaft verknüpft sind, die mit der mindestens einen in der Zugriffsanforderung angegebenen Datenelementeigenschaft übereinstimmt.

2. Verfahren nach Anspruch 1, wobei die mit jedem in der gemeinsam genutzten Datenelementdatenbank gespeicherten Datenelement verknüpften Datenelementmetadaten eine Vielzahl von Eigenschaften des Datenelements angeben und die Datenelementeigenschaftsdaten der Zugriffsanforderung eine Vielzahl von Datenelementeigenschaften angeben, und der Schritt zum Gewähren von Zugriff auf in der gemeinsam genutzten Datenelementdatenbank gespeicherte Datenelemente Folgendes umfasst:
Gewähren von Zugriff auf alle in der gemeinsam genutzten Datenelementdatenbank gespeicherten Datenelemente, die mit der Beziehungskennung verknüpft sind, die mit der identifizierten Beziehungskennung übereinstimmt, und die mit einer Vielzahl von Datenelementeigenschaften verknüpft sind, die mit der Vielzahl von in der Zugriffsanforderung angegebenen Datenelementeigenschaften übereinstimmen.

3. Verfahren nach Anspruch 1, wobei die mindestens eine Eigenschaft des Datenelements einen Datenelementtyp umfasst.

4. Verfahren nach Anspruch 2, wobei die mindestens zwei Eigenschaften des Datenelements einen Datenelementtyp und eine Datenelementkennung, die ein bestimmtes Datenelement identifiziert, umfassen.

5. Verfahren nach Anspruch 1, wobei die Zugriffsanforderung weiter eine Zugriffsaktionskennung umfasst, die einen Datenzugriffsaktionstyp angibt, wobei das Verfahren Auswählen der Zugriffsrichtlinie basierend auf der mindestens einen Datenelementeigenschaft und der Zugriffsaktionskennung umfasst.

6. Verfahren nach einem vorstehenden Anspruch, wobei die in der Beziehungsdatenbank gespeicherten Beziehungsdaten auf Beziehungsstrukturen hinweisen, die Beziehungen zwischen der Vielzahl von Instanzen entsprechen, Folgendes umfassen:
Datenelemente eines ersten Typs, die mit den Instanzen verknüpft sind, und
Datenelemente eines zweiten Typs, die mit Beziehungstypen verknüpft sind, die zwei Instanzen der Vielzahl von Instanzen verbinden, wobei
jede Beziehungsstruktur durch eine Kombination von Datenelementen des ersten Typs und Datenelementen des zweiten Typs gebildet wird.

7. Verfahren nach Anspruch 6, wobei jede Beziehungskennung, die mit einer gegebenen Beziehungsstruktur verknüpft ist, die in der Beziehungsdatenbank gespeichert ist, mit einem bestimmten Datenelement des zweiten Typs verknüpft ist, das einen Teil der gegebenen Beziehungsstruktur bildet, wobei die Beziehungskennung dadurch mit einem Beziehungstyp verknüpft ist, der zwei bestimmte Instanzen der identifizierten Beziehungsstruktur verbindet.

8. Verfahren nach Anspruch 6 oder 7, wobei Datenelemente des ersten Typs Knoten darstellen und Datenelemente des zweiten Typs Kanten darstellen.

9. Verfahren nach einem vorstehenden Anspruch, wobei die gemeinsam genutzte Datenelementdatenbank eine Hauptbuchdatenbank ist.

10. Verfahren nach einem vorstehenden Anspruch, wobei die in der gemeinsam genutzten Elementdatenbank gespeicherten Datenelemente Datenelemente sind, die sich auf einen Geschäftsprozess beziehen.

11. System zum Steuern von Datenzugriff auf Datenelemente, wobei das System Folgendes umfasst:
eine mandantenfähige Softwareanwendung, die dazu konfiguriert ist, eine Vielzahl von Mandanten zu betreiben, und
eine Verwaltungsfunktion für gemeinsam genutzte Datenelemente, die eine Zugriffssteuerlogik, eine Datenbank für gemeinsam genutzte Datenelemente, eine Beziehungsdatenbank und eine Zugriffsrichtliniendatenbank umfasst, wobei
als Reaktion auf Identifizieren eines von einem Mandanten erzeugten Datenelements, das mit einer oder mehreren Softwareanwendungen von Drittinstanzen geteilt werden soll, die mandantenfähige Softwareanwendung zu Folgendem konfiguriert wird:
Kommunizieren einer Datenelementschreibanforderung, die das gemeinsam genutzte Datenelement und Datenelementmetadaten umfasst, die mindestens eine Eigenschaft des Datenelements und eine Beziehungskennung angeben, die mit einer Beziehung verknüpft ist, die eine mit dem Mandanten verknüpfte Instanz, die das Datenelement erzeugt hat, und eine weitere Instanz verbindet, woraufhin die Verwaltungsfunktion für gemeinsam genutzte Datenelemente zu Folgendem konfiguriert wird:
Schreiben des Datenelements und der Datenelementmetadaten in die Datenbank für gemeinsam genutzte Datenelemente, wobei anschließend
bei Empfang einer Zugriffsanforderung für Zugriff auf ein oder mehrere in der gemeinsam genutzten Datenelementdatenbank gespeicherte Datenelemente von einer Softwareanwendung, die mit einer anfordernden Instanz verknüpft ist, wobei die Zugriffsanforderung eine Anfordererkennung, die die anfordernde Instanz identifiziert, und Datenelementeigenschaftsdaten, die mindestens eine Datenelementeigenschaft angeben, beinhaltet, die Zugriffssteuerlogik der Verwaltungsfunktion für gemeinsam genutzte Datenelemente zu Folgendem konfiguriert wird:
Auswählen einer Zugriffsrichtlinie aus einer Vielzahl von in der Zugriffsrichtliniendatenbank gespeicherten Zugriffsrichtlinien basierend auf der mindestens einen Datenelementeigenschaft, wobei jede Zugriffsrichtlinie einen Beziehungsstrukturtyp definiert;
Abfragen der Beziehungsdatenbank unter Verwendung der Anfordererkennung und des in der Zugriffsrichtlinie definierten Beziehungsstrukturtyps, um alle Beziehungsstrukturen zu identifizieren, an denen die anfordernde Instanz beteiligt ist und die konform mit dem in der Zugriffsrichtlinie definierten Beziehungsstrukturtyp sind, wobei die Beziehungsdatenbank Beziehungsdaten darin gespeichert aufweist, die auf eine Vielzahl von Beziehungsstrukturen hinweisen, die Beziehungen zwischen einer Vielzahl von Instanzen entsprechen, wobei jede Beziehungsstruktur eine Beziehungskennung beinhaltet; und, falls eine oder mehrere Beziehungsstrukturen identifiziert werden:
Identifizieren der Beziehungskennung, die mit jeder identifizierten Beziehungsstruktur verknüpft ist, und
Gewähren für die mit der anfordernden Instanz verknüpfte Softwareanwendung von Zugriff auf alle in der gemeinsam genutzten Datenelementdatenbank gespeicherten Datenelemente, die mit einer Beziehungskennung verknüpft sind, die mit der identifizierten Beziehungskennung übereinstimmen und die mit mindestens einer Datenelementeigenschaft verknüpft sind, die mit der mindestens einen in der Zugriffsanforderung angegebenen Datenelementeigenschaft übereinstimmt.

12. System nach Anspruch 11, wobei die mandantenfähige Softwareanwendung weiter dazu konfiguriert ist, Datenelemente zu identifizieren, die nicht mit Softwareanwendungen von Drittinstanzen geteilt werden sollen, und solche Datenelemente in eine partitionierte Datenbank zu schreiben.

13. Zugriffssteuerlogik zur Verwendung in einem System nach Anspruch 11, wobei die Zugriffssteuerlogik zu Folgendem konfiguriert ist:
Empfangen einer Zugriffsanforderung für Zugriff auf ein oder mehrere Datenelemente, die von Mandanten einer mandantenfähigen Softwareanwendung erzeugt wurden, die selektiv in eine gemeinsam genutzte Datenelementdatenbank geschrieben wurden, auf der Grundlage, dass Zugriff auf die Datenelemente mit Softwareanwendungen von Drittinstanzen geteilt werden soll, wobei jedes Datenelement in Verknüpfung mit Datenelementmetadaten gespeichert wird, die mindestens eine Eigenschaft des Datenelements und eine Beziehungskennung angeben, die mit einer Beziehung verknüpft ist, die eine mit dem Mandanten verknüpfte Instanz, der das Datenelement erzeugt hat, und eine weitere Instanz verbindet, wobei das Verfahren Folgendes umfasst:
Empfangen der Anfrage von einer Softwareanwendung, die mit einer anfordernden Instanz verknüpft ist, wobei die Zugriffsanforderung eine Anfordererkennung, die die anfordernde Instanz identifiziert, und Datenelementeigenschaftsdaten, die mindestens eine Datenelementeigenschaft angeben, beinhaltet;
Auswählen einer Zugriffsrichtlinie aus einer Vielzahl von in einer Zugriffsrichtliniendatenbank gespeicherten Zugriffsrichtlinien basierend auf der mindestens einen Datenelementeigenschaft, wobei jede Zugriffsrichtlinie einen Beziehungsstrukturtyp definiert;
Abfragen einer Beziehungsdatenbank unter Verwendung der Anfordererkennung und des in der Zugriffsrichtlinie definierten Beziehungsstrukturtyps, um alle Beziehungsstrukturen zu identifizieren, an denen die anfordernde Instanz beteiligt ist und die konform mit dem in der Zugriffsrichtlinie definierten Beziehungsstrukturtyp sind, wobei die Beziehungsdatenbank Beziehungsdaten darin gespeichert aufweist, die auf eine Vielzahl von Beziehungsstrukturen hinweisen, die Beziehungen zwischen einer Vielzahl von Instanzen entsprechen, wobei jede Beziehungsstruktur eine Beziehungskennung beinhaltet; und, falls eine oder mehrere Beziehungsstrukturen identifiziert werden:
Identifizieren der Beziehungskennung, die mit jeder identifizierten Beziehungsstruktur verknüpft ist, und
Gewähren für die mit der anfordernden Instanz verknüpfte Softwareanwendung von Zugriff auf alle in der gemeinsam genutzten Datenelementdatenbank gespeicherten Datenelemente, die mit einer Beziehungskennung verknüpft sind, die mit der identifizierten Beziehungskennung übereinstimmt, und die mit mindestens einer Datenelementeigenschaft verknüpft sind, die mit der mindestens einen in der Zugriffsanforderung angegebenen Datenelementeigenschaft übereinstimmt.

14. Computerprogramm, das, wenn es auf einer Rechenvorrichtung betrieben wird, ein Verfahren nach Anspruch 1 implementiert.

## Revendications

1. Procédé de commande d'accès aux données à des éléments de données générés par des locataires d'une application logicielle multi-locataires qui ont été écrits de manière sélective dans une base de données d'éléments de données partagés sur la base qu'un accès aux éléments de données doit être partagé avec des applications logicielles tierces, chaque élément de données étant stocké en association avec des métadonnées d'éléments de données précisant au moins une propriété de l'élément de données et un identifiant de relation associé à une relation reliant une entité associée au locataire ayant généré l'élément de données et une entité supplémentaire, ledit procédé comprenant :
la réception d'une demande d'accès pour accéder à un ou plusieurs éléments de données stockés dans la base de données d'éléments de données partagés à partir d'une application logicielle associée à une entité demandeuse, ladite demande d'accès incluant un identifiant de demandeur identifiant l'entité demandeuse et des données de propriété d'éléments de données précisant au moins une propriété d'élément de données ;
la sélection, sur la base d'au moins une propriété d'élément de données, d'une politique d'accès parmi une pluralité de politiques d'accès, chaque politique d'accès définissant un type de structure de relation ;
l'interrogation d'une base de données de relations à l'aide de l'identifiant du demandeur et du type de structure de relation défini dans la politique d'accès afin d'identifier toutes les structures de relation à laquelle l'entité demandeuse prend part et qui est conforme au type de structure de relation défini dans la politique d'accès, ladite base de données de relations présentant, stockées sur celle-ci, des données de relation indiquant une pluralité de structures de relation correspondant à des relations entre une pluralité d'entités, chaque structure de relation incluant un identifiant de relation ; et, si une ou plusieurs structures de relation sont identifiées :
l'identification de l'identifiant de relation associé à chaque structure de relation identifiée, et
l'autorisation d'accès à tous les éléments de données stockés dans la base de données d'éléments de données partagés qui sont associés à un identifiant de relation qui correspond à l'identifiant de relation identifié et qui sont associés à au moins une propriété d'élément de données qui correspond à la au moins une propriété d'élément de données précisée dans la demande d'accès.

2. Procédé selon la revendication 1, dans lequel les métadonnées d'éléments de données associées à chaque élément de données stocké dans la base de données d'éléments partagée précisent une pluralité de propriétés de l'élément de données, et les données de propriété d'éléments de données de la demande d'accès précisent une pluralité de propriétés d'éléments de données, et l'étape d'autorisation d'accès aux éléments de données stockés dans la base de données d'éléments de données partagés comprend :
l'autorisation d'accès à tous les éléments de données stockés dans la base de données d'éléments de données partagés qui sont associés à l'identifiant de relation qui correspond à l'identifiant de relation identifié et qui sont associés à une pluralité de propriétés d'éléments de données qui correspondent à la pluralité de propriétés d'éléments de données précisées dans la demande d'accès.

3. Procédé selon la revendication 1, dans lequel la au moins une propriétés de l'élément de données comprend un type d'élément de données.

4. Procédé selon la revendication 2, dans lequel les au moins deux propriétés de l'élément de données comprennent un type d'élément de données et un identifiant d'élément de données identifiant un élément de données spécifique.

5. Procédé selon la revendication 1, dans lequel la demande d'accès comprend en outre un identifiant d'action d'accès précisant un type d'action d'accès aux données, ledit procédé comprenant la sélection de la politique d'accès sur la base de la au moins une propriété d'élément de données et de l'identifiant d'action d'accès.

6. Procédé selon l'une quelconque des revendications précédentes, dans lequel les données de relation stockées dans la base de données de relations indiquant des structures de relation correspondant à des relations entre la pluralité d'entités comprennent :
des éléments de données d'un premier type associés aux entités, et
des éléments de données d'un second type associés à des types de relations reliant deux entités parmi la pluralité d'entités, dans lequel
chaque structure de relation est formée par une combinaison d'éléments de données du premier type et d'éléments de données du second type.

7. Procédé selon la revendication 6, dans lequel chaque identifiant de relation associé à une structure de relation donnée stockée dans la base de données de relations est associé à un élément de données spécifique du second type qui fait partie de la structure de relation donnée, ledit identifiant de relation étant ainsi associé à un type de relation reliant deux entités spécifiques de la structure de relation identifiée.

8. Procédé selon la revendication 6 ou 7, dans lequel des éléments de données du premier type représentent des naeuds et des éléments de données du second type représentent des bords.

9. Procédé selon l'une quelconque des revendications précédentes, dans lequel la base de données d'éléments de données partagés est une base de données de registre.

10. Procédé selon une quelconque revendication précédente, dans lequel les éléments de données stockés dans la base de données d'éléments partagée sont des éléments de données relatifs à un processus métier.

11. Système de commande d'accès aux données à des éléments de données, ledit système comprenant :
une application logicielle multi-locataires configurée pour gérer une pluralité de locataires, et
une fonction de gestion d'éléments de données partagés comprenant une logique de commande d'accès, une base de données d'éléments de données partagés, une base de données de relations et une base de données de politiques d'accès, dans lequel
en réponse à l'identification d'un élément de données généré par un locataire qui doit être partagé avec une ou plusieurs applications logicielles tierces, ladite application logicielle multi-locataires est configurée pour :
communiquer une demande d'écriture d'éléments de données comprenant l'élément de données partagé et les métadonnées d'éléments de données précisant au moins une propriété de l'élément de données et un identifiant de relation associé à une relation reliant une entité associée au locataire qui a généré l'élément de données et une entité supplémentaire, en réponse à laquelle la fonction de gestion d'éléments de données partagés est configurée pour :
écrire l'élément de données et les métadonnées d'éléments de données dans la base de données d'éléments de données partagés, dans lequel ultérieurement,
à la réception d'une demande d'accès pour accéder à un ou plusieurs éléments de données stockés dans la base de données d'éléments de données partagés à partir d'une application logicielle associée à une entité demandeuse, ladite demande d'accès incluant un identifiant de demandeur identifiant l'entité demandeuse et des données de propriété d'éléments de données précisant au moins une propriété d'élément de données, ladite logique de commande d'accès de la fonction de gestion d'éléments de données partagés est configurée pour :
sélectionner, sur la base de la au moins une propriété d'élément de données, une politique d'accès parmi une pluralité de politiques d'accès stockées dans la base de données de politiques d'accès, chaque politique d'accès définissant un type de structure de relation ;
interroger la base de données de relations à l'aide de l'identifiant du demandeur et du type de structure de relation défini dans la politique d'accès afin d'identifier toutes les structures de relation à laquelle l'entité demandeuse prend part et qui est conforme au type de structure de relation défini dans la politique d'accès, ladite base de données de relations présentant, stockées sur celle-ci, des données de relation indiquant une pluralité de structures de relation correspondant à des relations entre une pluralité d'entités, chaque structure de relation incluant un identifiant de relation ; et, si une ou plusieurs structures de relation sont identifiées :
identifier l'identifiant de relation associé à chaque structure de relation identifiée, et
autoriser à l'application logicielle associée à l'entité demandeuse un accès à tous les éléments de données stockés dans la base de données d'éléments de données partagés qui sont associés à un identifiant de relation qui correspond à l'identifiant de relation identifié et qui sont associés à au moins une propriété d'élément de données qui correspond à la au moins une propriété d'élément de données précisée dans la demande d'accès.

12. Système selon la revendication 11, dans lequel l'application logicielle multi-locataires est configurée en outre pour identifier des éléments de données qui ne doivent pas être partagés avec des applications logicielles d'entités tierces et écrire ces éléments de données dans une base de données partitionnée.

13. Logique de commande d'accès destinée à être utilisée dans un système selon la revendication 11, ladite logique de commande d'accès étant configurée pour :
recevoir une demande d'accès pour accéder à un ou plusieurs éléments de données générés par des locataires d'une application logicielle multi-locataires qui ont été écrits de manière sélective dans une base d'éléments de données partagés sur la base qu'un accès aux éléments de données doit être partagé avec des applications logicielles tierces, chaque élément de données étant stocké en association avec des métadonnées d'éléments de données précisant au moins une propriété de l'élément de données et un identifiant de relation associé à une relation reliant une entité associée au locataire ayant généré l'élément de données et une entité supplémentaire ;
la demande est reçue d'une application logicielle associée à une entité demandeuse, ladite demande d'accès incluant un identifiant de demandeur identifiant l'entité demandeuse et des données de propriété d'éléments de données précisant au moins une propriété d'élément de données;
sélectionner, sur la base de la au moins une propriété d'élément de données, une politique d'accès parmi une pluralité de politiques d'accès stockées dans une base de données de politiques d'accès, chaque politique d'accès définissant un type de structure de relation ;
interroger une base de données de relations à l'aide de l'identifiant du demandeur et du type de structure de relation défini dans la politique d'accès afin d'identifier toutes les structures de relation à laquelle l'entité demandeuse prend part et qui est conforme au type de structure de relation défini dans la politique d'accès, ladite base de données de relations présentant, stockées sur celle-ci, des données de relation indiquant une pluralité de structures de relation correspondant à des relations entre une pluralité d'entités, chaque structure de relation incluant un identifiant de relation ; et, si une ou plusieurs structures de relation sont identifiées :
identifier l'identifiant de relation associé à chaque structure de relation identifiée, et
autoriser à l'application logicielle associée à l'entité demandeuse un accès à tous les éléments de données stockés dans la base de données d'éléments de données partagés qui sont associés à un identifiant de relation qui correspond à l'identifiant de relation identifié et qui sont associés à au moins une propriété d'élément de données qui correspond à la au moins une propriété d'élément de données précisée dans la demande d'accès.

14. Programme informatique qui, lorsqu'il est exécuté sur un dispositif informatique, implémente un procédé selon la revendication 1.
